(19) Europäisches Patentamt
European Patent Office
Office européen des brevets

(11) **EP 3 582 548 A1**

(12) **EUROPEAN PATENT APPLICATION**
published in accordance with Art. 153(4) EPC

(43) Date of publication:
**18.12.2019 Bulletin 2019/51**

(51) Int Cl.:
*H04W 36/06* (2009.01)    *H04W 16/14* (2009.01)
*H04W 84/12* (2009.01)

(21) Application number: **18751075.5**

(22) Date of filing: **06.02.2018**

(86) International application number:
**PCT/JP2018/004022**

(87) International publication number:
**WO 2018/147280 (16.08.2018 Gazette 2018/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **07.02.2017 JP 2017020720**

(71) Applicant: **NEC Corporation**
**Tokyo 108-8001 (JP)**

(72) Inventors:
• **MARUHASHI, Kenichi**
**Tokyo 108-8001 (JP)**
• **TSUJI, Akira**
**Tokyo 108-8001 (JP)**

(74) Representative: **Vossius & Partner**
**Patentanwälte Rechtsanwälte mbB**
**Siebertstrasse 3**
**81675 München (DE)**

(54) **COMMUNICATION NETWORK SYSTEM, WIRELESS SYSTEM, WIRELESS DEVICE, COMMUNICATION CONTROL METHOD, AND PROGRAM**

(57) The present invention enables channel switching corresponding to communication requirement of each wireless system. A wireless apparatus of a wireless system includes a connection rule information table that includes at least a waiting time for channel switching and information prescribing a channel switching order, a length of the waiting time set in accordance with priority level of the wireless system. When switching a channel, the wireless apparatus selects a channel in accordance with the order set in the connection rule information table and controls a wireless connection using the selected channel after an elapse of the waiting time set in the connection rule information table, when performing channel switching.

FIG. 11

FREQUENCY SWITCHING

START

SELECT FREQUENCY CHANNEL FROM CONNECTION RULE INFORMATION TABLE — S111

SWITCH FREQUENCY CHANNEL — S112

MEASURE CHANNEL OCCUPANCY RATE — S113

END OF WAITING TIME? — S114 (No / Yes)

COMMUNICATION POSSIBLE? — S115 (Yes / No)

START COMMUNICATION — S116

END

**Description**

TECHNICAL FIELD

(Reference to Related Application)

The present invention is based upon and claims the benefit of the priority of Japanese patent application No. 2017-020720 filed on February 7, 2017, the disclosure of which is incorporated herein in its entirety by reference thereto.

The present invention relates to a communication network system, wireless system, wireless apparatus, communication control method, and program.

BACKGROUND

In recent years, a number of various wireless systems such as mobile phones, wireless LANs (Local Area Networks), Bluetooth (registered trademark), etc., have been used. For industrial use, many systems such as those compatible with wireless LAN standards or original wireless systems are available. In particular, frequencies centered around the ISM band (Industry, Science, Medical band) are utilized. Recently, the Internet of Things (IoT), in which a wide variety of "things" are connected to the Internet, has become common. For example, sensor data and image data are collected at manufacturing sites or warehouses, and these pieces of data are utilized to improve efficiency of production and logistics. Data is collected via wireless communication from things that can move or that have movable parts. When an equipment is moved frequently, or when laying cable is difficult or expensive, wireless communication is preferred to wired communication. More wireless systems for these purposes are expected to be implemented in the future. It is common to implement a separate wireless system for each wireless application, as a result of which there coexist independent wireless systems.

Further, in a closed space where a plurality of wireless systems coexist, since people and things may move around, a radio environment may sometimes change dynamically and be affected by noise. In this case, communication will become unstable, interruptions may occur, and delay and jitter tolerance (for example, requirement of application Quality of Experience (QoE)) required by the application (for example, an application running on a server and providing a service(s) to a terminal(s) with which the server communicates) using the communication will not be met.

In a case where different wireless systems are utilized, a handover technology in which individual terminals perform selection and switching with regards to wireless schemes, frequencies, and access destinations is used. It is known, however, that simple switching in the existing handover technologies does not always guarantee an optimum operation of heterogeneous systems having different functions and interfaces. It is also known that a mechanism for managing and reconfiguring a network integrally and dynamically is needed for optimal operation of heterogeneous systems.

Patent Literature 1 describes a technology that improves communication performance by dynamically reconfiguring a network in a communication network comprising different systems in order to accommodate various wireless systems. In the disclosure of Patent Literature 1, a network management apparatus 141 is provided as illustrated in Fig. 17 to provide a communication network system in which communication terminals communicate with each other while dynamically reconfiguring a scheme for connecting to a plurality of wired or wireless communication networks. The network management apparatus 141 includes a connection policy information table 146 stored in storage means, communication network reconfiguration management means 148 for selecting a scheme for connecting to a communication network based on the connection policy information table 146, and communication network reconfiguration execution means 149 for reconfiguring a connection into a selected connection scheme. A corresponding communication terminal includes terminal reconfiguration management means for selecting a connection scheme on the communication terminal side in cooperation with the communication network reconfiguration management means 148 and terminal reconfiguration execution means for reconfiguring a connection into a selected connection scheme. Note that Fig. 17 is based on Fig. 2 of Patent Literature 1 (the reference signs in Fig. 17 are changed from those in Fig. 2 of Patent Literature 1).

In Patent Literature 1, connection of each wireless system is reconfigured based on the connection policy information table 146 rather than based on a direct instruction from the management apparatus. Therefore, autonomy is secured for each wireless system, and rigorous definition or implementation of functions and interfaces are not required.

Patent Literature 1, however, lacks a mechanism of time management for reconfiguring a connection into a selected connection scheme (it does not disclose any time management means). For example, if a plurality of communication channels used between wireless apparatuses in wireless systems are unexpectedly disconnected, a plurality of wireless apparatuses in a plurality of wireless systems will simultaneously seek new communication channels. As a result, it will take time to determine a communication channel, and for example, a communication requirement of an application requesting a low latency cannot be met.

CITATION LIST

PATENT LITERATURE

[Patent Literature 1]

Japanese Patent Kokai Publication No. JP2009-246874A

SUMMARY

TECHNICAL PROBLEM

The related technology described above will be analyzed.

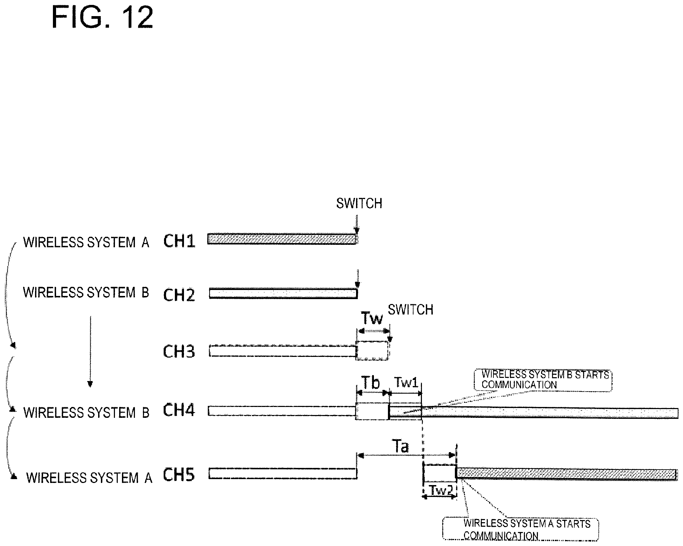

In a communication network system in which there coexist a plurality of wireless systems in a predetermined space, when a plurality of communication channels in use are, unexpectedly disconnected, for example, a wireless environment change, and there may occur a case in which when performing network reconfiguring, a communication requirement of wireless communication requiring low latency, for example, may not be satisfied (this matter will be discussed later with reference to Fig. 12).

Accordingly, it is an object of the present invention to provide a wireless system, apparatus, communication network system, communication control method, and program, each enabling channel switching corresponding to a communication requirement or the like of each wireless system.

SOLUTION TO PROBLEM

According to an embodiment of the present invention, there is provided a wireless apparatus included in a wireless system. The wireless apparatus includes a connection rule information table that includes at least a waiting time for channel switching and information prescribing a channel switching order. A length of the waiting time is set in accordance with priority level of the wireless system. The wireless apparatus may be configured to include a connection execution means that selects a channel in accordance with the order set in the connection rule information table and controls wireless connection using the selected channel after waiting for a duration of the waiting time set in the connection rule information table, when performing channel switching.

According to another embodiment of the present invention, there is provided a wireless system including an access point and a terminal that wirelessly communicates with the access point. In the wireless system, the access point includes a connection rule information table that includes at least a waiting time for channel switching and information prescribing a channel switching order. A length of the waiting time is set in accordance with priority level of the wireless system.

The access point may be configured to include a connection execution means that selects a channel in accordance with the order set in the connection rule information table and controls wireless connection using the selected channel after waiting for a duration of the waiting time set in the connection rule information table, when performing channel switching.

Further, the terminal may be configured to include a connection rule information table which is the same as the connection rule information table of the access point. The terminal may be configured to, when performing channel switching, select a channel in accordance with the order set in the connection rule information table.

According to yet another embodiment of the present invention, there is provided a management apparatus connected to one or more wireless systems.

The management apparatus may be configured to comprise a network connection information collection means that collects at least one of communication function information and channel information of the wireless system, a network connection management means that generates a connection policy for the wireless system, and a data attribute information collection means that collects attribute information of data communicated by the wireless system, and to provide the attribute information of the data and the connection policy to at least one wireless apparatus in the wireless system.

According to yet another embodiment of the present invention, there is provided a communication network system including a plurality of wireless systems. The plurality of wireless systems may be configured to coexist in a predetermined space.

The communication network system has a management apparatus that comprises a network connection information collection means that collects at least one of communication function information and channel information of at least one of the plurality of wireless systems, a network connection management means that generates a connection policy for at least one of the plurality of wireless systems, and a data attribute information collection means that collects attribute information of data communicated by at least one of the plurality of wireless systems.

In the communication network system, at least one of the plurality of wireless systems comprises a connection rule setting means that generates a connection rule information table that includes at least a waiting time for channel switching and information prescribing a channel switching order from the connection policy and the attribute information of the data, and a connection execution means that makes a wireless connection using a channel selected based on the connection rule information table.

In the communication network system, a plurality of wireless apparatuses, included in at least one of the plurality of wireless systems, that wirelessly communicate share the connection rule information table. At least one of the plurality of wireless apparatuses may be configured to comprise the connection execution means, select a channel in accordance with the order in the connection rule information table when performing channel switching, and control a wireless connection using the selected channel after waiting for a duration of the waiting time set in the connection rule information table.

According to yet another embodiment of the present invention, there is provided a communication control method for a wireless apparatus included in a wireless system.

In the communication control method, the wireless apparatus included in the wireless system has a connection rule information table that includes at least a waiting time for channel switching and information prescribing a channel switching order,

the length of the waiting time is set in accordance with priority level of the wireless system, and

a channel is selected in accordance with the order set in the connection rule information table and a wireless connection is controlled using the selected channel after waiting for a duration of the waiting time set in the connection rule information table when performing channel switching.

According to yet another embodiment of the present invention, there is provided a program causing a computer to execute a process of storing a connection rule information table that includes at least a waiting time for channel switching and information prescribing a channel switching order and that sets a length of the waiting time in accordance with priority level of a wireless system, and a connection execution process of selecting a channel in accordance with the order set in the connection rule information table and controlling a wireless connection using the selected channel after waiting for a duration of the waiting time set in the connection rule information table when performing channel switching.

According to yet another embodiment of the present invention, there is provided a program causing a computer to execute a network connection information collection process of collecting at least one of communication function information and channel information of a wireless system, a network connection management process of generating a connection policy for the wireless system, a data attribute information collection process of collecting attribute information of data communicated by the wireless system, and a process of providing the attribute information of the data and the connection policy to at least one wireless apparatus in the wireless system.

ADVANTAGEOUS EFFECTS OF INVENTION

According to the present invention, there is provided a non-transitory computer readable recording medium (for example, a semiconductor storage such as RAM (Random Access Memory), ROM (Read Only Memory), or EEPROM (Electrically Erasable and Programmable ROM)), HDD (Hard Disk Drive), CD (Compact Disc), and DVD (Digital Versatile Disc)) that stores the program described above.

BRIEF DESCRIPTION OF THE DRAWINGS

Fig. 1 is a diagram illustrating a configuration of a communication network system according to a first example embodiment of the present invention.

Fig. 2 is a flowchart for explaining an operation of a first example embodiment of the present invention.

Fig. 3 is a diagram illustrating an example of an access point communication function information table and a terminal communication function information table in the first example embodiment of the present invention.

Fig. 4 is a diagram illustrating an example of a channel information table in the first example embodiment of the present invention.

Fig. 5 is a diagram illustrating an example of a connection policy information table in the first example embodiment of the present invention.

Fig. 6 is a diagram illustrating an example of a data attribute table in the first example embodiment of the present invention.

Fig. 7 is a diagram illustrating an example of a connection rule information table in the first example embodiment of the present invention.

Fig. 8 is a diagram illustrating frequency channel switching in the first example embodiment of the present invention.

Fig. 9 is a diagram illustrating frequency channel switching in another example embodiment of the present invention.

Fig. 10 is a diagram illustrating frequency channel switching in yet another example embodiment of the present invention.

Fig. 11 is a flowchart for explaining a frequency channel switching procedure in an example embodiment of the present invention.

Fig. 12 is a diagram illustrating an example of frequency channel switching when a waiting time is the same for a plurality of wireless systems.

Fig. 13 is a diagram illustrating an example of frequency channel switching in a case where a plurality of wireless systems have different waiting times.

Fig. 14 is a diagram illustrating the configuration of a communication network system according to a second example embodiment of the present invention.

Fig. 15 is a diagram illustrating an example of a connection rule information table in the second example embodiment of the present invention.

Fig. 16 is a diagram describing a fourth example embodiment of the present invention.

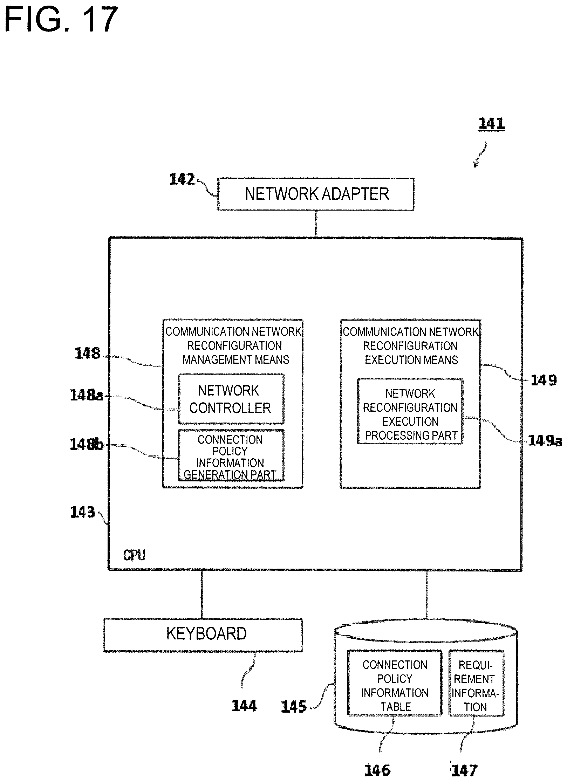

Fig. 17 is taken from Fig. 2 of Patent Literature 1.

DESCIPTION OF EMBODIMENTS

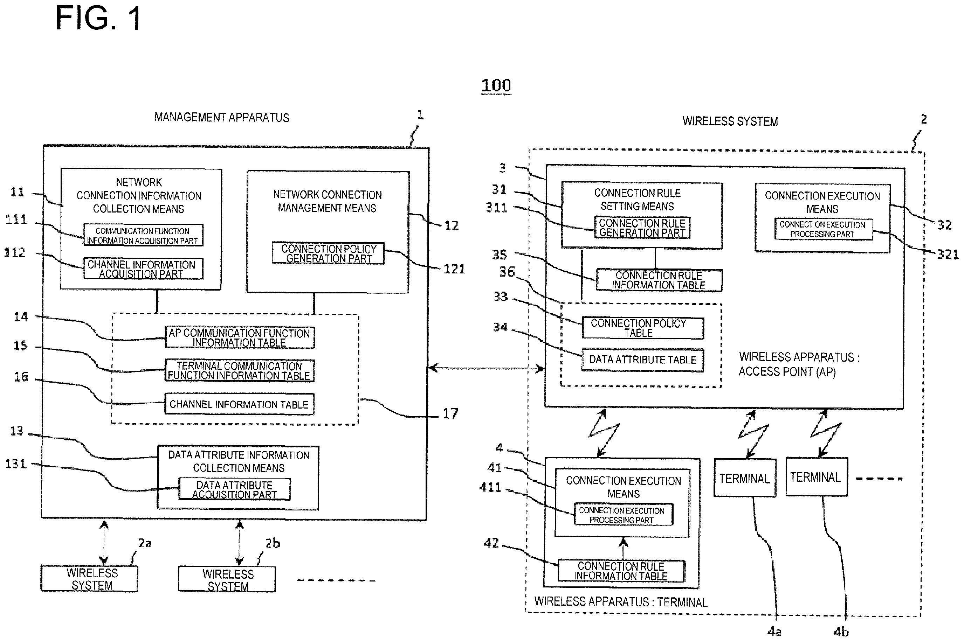

Example embodiments of the present invention will be described below. A communication network system (for example, 100 in Fig. 1) according to an embodiment of the present invention, includes a plurality of wireless systems (for example, 2, 2a, 2b, ... in Fig. 1) and a management apparatus (for example, 1 in Fig. 1) connected to at least one of the plurality of wireless systems (for example, 2, 2a, 2b, ... in Fig. 1). For example, the plurality of wireless systems (for example, 2, 2a, 2b, ... in Fig. 1) may be configured to coexist in a predetermined space.

In the communication network system (100) according to an embodiment of the present invention, the management apparatus (1) may be configured to include a network connection information collection means (for example, also referred to as a network connection information collection unit 11 in Fig. 1) that collects communication function information and/or communication channel information on at least one (it may be all the wireless systems) of the plurality of wireless systems (2, 2a, 2b, ...) and a network connection management means (for example, also referred to as a network connection management unit 12 in Fig. 1) that generates a connection policy for at least one of the plurality of wireless systems (2, 2a, 2b, ...).

In the communication network system (100) according to an embodiment of the present invention, the management apparatus (1) may be configured to include a data attribute information collection means (for example, also referred to as a data attribute information collection means 13 in Fig. 1) that collects attribute information of data communicated by at least one of the plurality of wireless systems (2, 2a, 2b, ...).

In the communication network system (100) according to an embodiment of the present invention, at least one of the wireless systems (2, 2a, 2b, ...) may be configured to include a connection rule setting means (for example also referred to as connection rule setting unit 31 in Fig. 1) that generates a connection rule information table (for example, 35 in Fig. 1) from the connection policy and the attribute information of the data, and a connection execution means (for example, also referred to as a connection execution unit 32 in Fig. 1) that makes a wireless connection using a frequency channel selected based on the connection rule information table (35).

In the communication network system (100) according to an embodiment of the present invention, a plurality of wireless apparatuses (for example, an access point 3 and a terminal 4 in Fig. 1) included in each of the wireless systems (for example, 2) may share the connection rule information table (35, 42).

In a part or all of the wireless systems in the communication network system (100) according to an embodiment of the present invention, in a case of, for example,

- failure of communication due to a rapid change in a wireless environment, or
- failure to continue communication with a required quality or the like,

the connection execution means (for example, the connection execution unit 32 in Fig. 1) in the wireless apparatus (3) included in each of the wireless systems may be configured to change a frequency channel, based on the connection rule information table (35).

A "rapid change in a wireless environment" include, for example,

- a change in a wireless environment in a period of time shorter than data transmission interval, and
- a change in the wireless environment in a period of time shorter than time it takes the wireless system to decide to perform frequency channel switching, though not limited thereto.

In the communication network system (100) according to an embodiment of the present invention, the connection rule information table (35, 42) may be configured to include a priority based on the attribute information of the data, and the connection execution means (for example, 32 in Fig. 1) may be configured to change a frequency channel in order in accordance with the priority (switching order of frequency channels) in the connection rule information table (35).

In the communication network system (100) according to an embodiment of the present invention, the connection rule information table (35, 42) may be configured to include a priority, based on the attribute information of the data, and the waiting time before a frequency channel is changed may be determined in accordance with the priority.

In the communication network system (100) according to an embodiment of the present invention, the connection execution means (for example, 32 in Fig. 1) may be configured to utilize the waiting time before a frequency channel is changed to measure (calculate) at least the usage state of the switching destination frequency channel (for example, a rate of channel frequency utilization by other wireless systems, also referred to as the "channel occupancy rate," "channel utilization," or "channel use rate").

In the communication network system (100) according to an embodiment of the present invention, the connection execution means (for example, the connection execution unit 32 in Fig. 1) may be configured to determine whether or not communication using the switching destination frequency channel is possible, based on a measurement result of usage state (channel occupancy rate) of the switching destination frequency channel by other wireless systems and, when it is determined that communication is possible, start communication, using the switching destination frequency channel, after an elapse of the waiting time.

In the communication network system (100) according to an embodiment of the present invention, the attribute information of the data may be configured to include at least one of the following attributes of communication in each wireless system: data type, data transmission interval, data amount, and delay budget.

In the communication network system (100) according to an embodiment of the present invention, a part or all of the connection policy, the attribute information of the data, and the connection rule information table may be updated (a connection policy generation part 121, a data attribute acquisition part 131, and a connection rule generation part 311 in Fig. 1).

In an embodiment of the present invention, the wireless apparatus (for example, 3 in Fig. 1) included in the wireless system (for example, 2 in Fig. 1) may be configured to include a connection rule setting means (the connection rule setting unit 31 in Fig. 1) that receives the connection policy and the attribute information of communicated data from an outside and generates the connection rule information table (for example, 35 in Fig. 1) from the connection policy and the attribute information of the data, and a connection execution means (the connection execution unit 32 in Fig. 1) that makes a wireless connection using a frequency channel selected based on the connection rule information table. The connection rule information table (for example, 35 in Fig. 1) of the wireless apparatus (3 in Fig. 1) and the connection rule information table (42) of another wireless apparatus (for example, 4 in Fig. 1) communicating with the wireless apparatus (3 in Fig. 1) may share information.

In the wireless apparatus (3) according to an embodiment of the present invention, the connection rule information table (35) may be configured to include a priority based on the attribute information of the data, and a connection execution means (for example, the connection execution part 32 in Fig. 1) may be configured to change a frequency channel in order in accordance with the priority.

In the wireless apparatus (3, 4 in Fig. 1) according to an embodiment of the present invention, the connection rule information table (35, 42) may be configured to include a priority which is based on the attribute information of the data.

The wireless apparatus (3 in Fig. 1) according to an embodiment of the present invention may be configured to include a connection rule setting means (the connection rule setting unit 31 in Fig. 1) that determines the waiting time before a frequency channel is changed in accordance with the priority.

The wireless apparatus (3) according to an embodiment of the present invention may be configured to utilize the waiting time before a frequency channel is changed to measure at least a channel occupancy rate (channel utilization) of the switching destination frequency channel.

In the wireless apparatus (3) according to an embodiment of the present invention, the connection execution means (for example, the connection execution unit 32 in Fig. 1) may be configured to determine whether or not communication using the switching destination frequency channel is possible, based on a measurement result of the channel occupancy rate of the switching destination frequency channel. The connection execution means (for example, the connection execution unit 32 in Fig. 1) may be configured to if communication is possible, start communication using the switching destination frequency channel after the waiting time has elapsed.

In a communication control method according to an embodiment of the present invention, the wireless apparatus (3 or 4) included in a wireless system may have a connection rule information table (35, 42) that includes at least information on a waiting time for channel switching and information prescribing the channel switching order, wherein a length of the waiting time may be set in accordance with the priority level of the wireless system, and when performing channel switching, a channel may be selected to make a wireless connection according to the order in the connection rule information table after the waiting time set in the connection rule information table has elapsed.

In a communication control method according to another embodiment of the present invention, the communication control method for a communication network system in which a plurality of wireless systems coexist in a predetermined space may include:

a network connection information collection step of collecting communication function information and/or communication channel information on each wireless system;
a network connection management step of generating a connection policy for each of the wireless systems;
a data attribute information collection step of collecting attribute information of data communicated by each of the wireless communication systems;
a connection rule setting step of having each of the wireless systems generate a connection rule information table from the connection policy and the attribute information of the data;
a connection execution step of making a wireless connection using a frequency channel selected based on the connection rule information table; and
a connection rule information sharing step of having a plurality of wireless apparatuses included in each of the wireless systems share the connection rule information table.

The communication control method according to another embodiment of the present invention may include a frequency channel changing step of having the wireless apparatus included in each of the wireless systems autonomously change a frequency channel based on the connection rule information table when, for example, communication cannot be performed due to rapid change in the wireless environment (for example changes in a period of time shorter than the data transmission interval or shorter than the time it takes to decide to perform frequency channel switching) or when communication cannot be continued with the required quality in a part or all of the wireless systems.

The communication control method according to another embodiment of the present invention may include a waiting time determination step of determining the waiting time before a frequency channel is changed in accordance with the priority, based on the attribute information of the data, included in the connection rule information table.

The communication control method according to each embodiment of the present invention described above may include a frequency channel measuring step of utilizing the waiting time before a frequency channel is changed to measure at least the channel occupancy rate (channel utilization) of the switching destination frequency channel.

The communication control method according to each embodiment of the present invention described above may determine whether or not communication using the switching destination frequency channel is possible based on the result of measuring the channel occupancy rate of the switching destination frequency channel, and start communication using the switching destination frequency channel after elapse of the waiting time, if communication is possible.

According to the embodiments described above, a network is reconfigured in accordance with the priority included in the connection rule information table, even when, for example, a plurality of wireless systems coexist in a predetermined space and the wireless environment changes. As a result, for example, it becomes possible to meet a communication requirement(s) (for example, QoE requirement) of an application requiring low latency in wireless communication.

Further, according to the embodiments described above, the connection rule information table is shared by a plurality of wireless apparatuses included in each wireless system, thereby unnecessitating searching for a frequency channel by sweeping frequencies. Further, it becomes possible to reduce the time required for switching frequency channels of a plurality of wireless systems since the frequency of the switching destination frequency channel is sequentially determined for the plurality of wireless systems.

Several example embodiments will be described below with reference to the drawings. Note that communication channel will be referred to as "channel." In a system in which wired and wireless communication coexist, channel designates "frequency channel" in a wireless section. Further, "channel occupancy rate (COR)" denotes the channel utilization of a frequency channel in a wireless section.

<First Example Embodiment>

Fig. 1 is a diagram illustrating a configuration example of the communication network system 100 relating to a first example embodiment of the present invention. With reference to Fig. 1, a plurality of wireless systems 2, 2a, 2b, ... are connected to the management apparatus 1. For example, the plurality of wireless systems 2, 2a, 2b, ... may be Wi-Fi (Wireless Fidelity (registered trademark)) Wireless LAN or Wi-MAX (Worldwide Interoperability for Microwave Access) or Bluetooth (registered trademark) or Zigbee (registered trademark) near-field wireless communication systems. The number of the plurality of wireless systems 2, 2a, 2b, ... is not particularly limited. The plurality of wireless systems 2, 2a, 2b, ... may coexist in a predetermined space (for example a closed space that is not a free space).

The management apparatus 1 includes a network connection information collection means 11 (network connection information collection unit), a network connection management means 12 (network connection management unit), the attribute information of the data collection means 13 (data attribute information collection unit), an access point (AP) communication function information table 14, a terminal communication function information table 15, and a channel information table 16.

The management apparatus 1 may be implemented in, for example, a server apparatus that provides a cloud service, though limited thereto. Alternatively, at least some of functions of the management apparatus 1 may be provided in each of the plurality of wireless systems 2, 2a, 2b, ..., or an access point 3 in the wireless system 2, may include at least some of the functions of the management apparatus 1.

The access point communication function information table 14, the terminal communication function information table 15, and the channel information table 16 are held in a storage apparatus 17 of the management apparatus 1. Each table may, as a matter of course, be stored in a separate storage apparatus. The storage apparatus 17 may be constituted by, for example, an EEPROM, HDD, or SSD (Solid State Drive).

The network connection information collection means 11 includes a communication function information acquisition part 111 that acquires information on communication functions of a plurality of wireless apparatuses (the access point 3, the terminal 4) constituting each of the wireless systems 2, 2a, 2b, ..., and a channel information acquisition part 112 that collects channel information.

The communication function information acquisition part 111 generates and updates the access point communication function information table 14 and the terminal communication function information table 15.

The access point communication function information table 14 and the terminal communication function information table 15 prescribe communication means and communication performance (bandwidth and data rate) of the access point 3 and the terminal 4, and may be provided in each wireless apparatus (the access point 3, the terminal 4) in the wireless system 2.

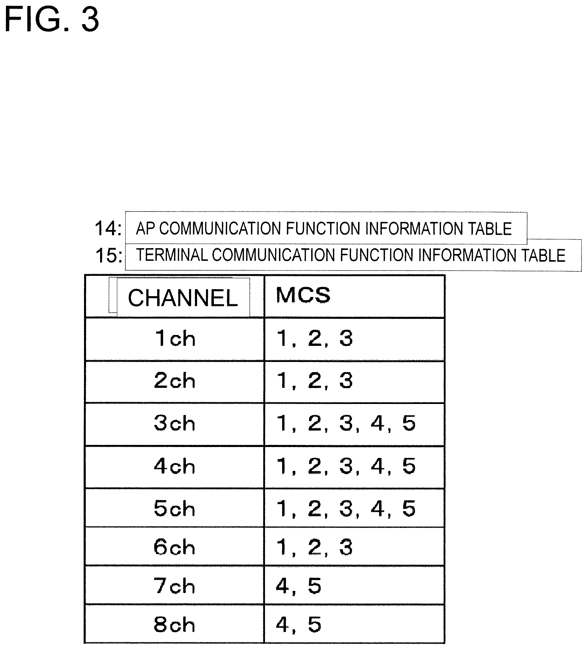

For example, as illustrated in Fig. 3, the access point communication function information table 14 may be configured to include frequency channels and MCS (Modulation and Coding Scheme) indexes in the access point 3 of each wireless system 2. The terminal communication function information table 15 for each terminal (4, 4a, 4b, ...) in each wireless system may also be configured to include frequency channels and MCS (Modulation and Coding Scheme) indexes in the access point 3, as illustrated Fig. 3. Further, the access point communication function information table 14 and the terminal communication function information table 15 may include information that can be associated with a channel, such as modulation scheme or data rate, instead of MCS.

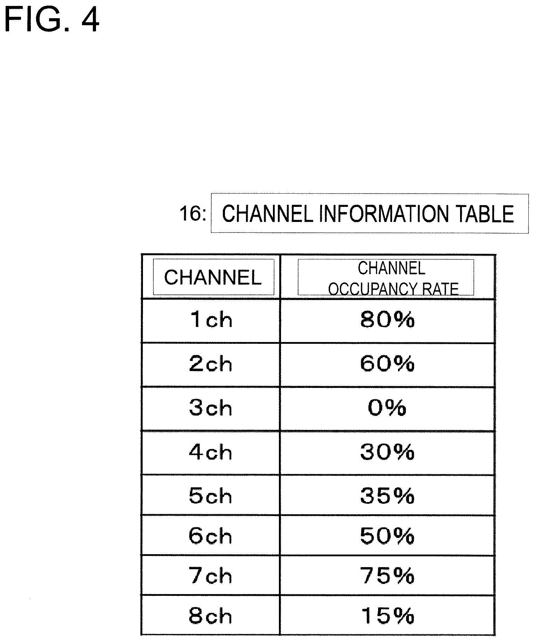

The channel information acquisition part 112 generates and updates the channel information table 16. The channel information table 16 sets and holds a measurement result or a calculation result of a communication status (information representing a bandwidth or quality in a specific or plural communication) of each channel in the wireless system. In an example of Fig. 4, the channel information table 16 includes a channel occupancy rate (COR) (frequency utilization in each channel) of each channel. Further, the channel information may be configured to include at least one of the followings: reception strength, bit error rate (BER), packet error rate (PER), round trip time (RTT), etc., instead of or along with a channel occupancy rate (COR).

The network connection management means 12 includes the connection policy generation part 121. The connection policy generation part 121 generates a connection policy that prescribes a communication bandwidth of each channel and a priority given to each channel, for each wireless system, by referring to the information in the access point communication function information table 14, the terminal communication function information table 15, and the channel information table 16. The connection policy generated by the connection policy generation part 121 is set in a connection policy table 33 of the access point 3 in the wireless system 2.

The generation of the connection policy by the connection policy generation part 121 and setting of the generated connection policy in the connection policy table 33 of the access point 3 are done as appropriate. The connection policy may be generated and set in the connection policy table 33, for example,

- at every predetermined time period, or
- when a predetermined event occurs, or
- in response to an instruction entry by a system administrator at the management apparatus 1 side, or the like, though limited thereto.

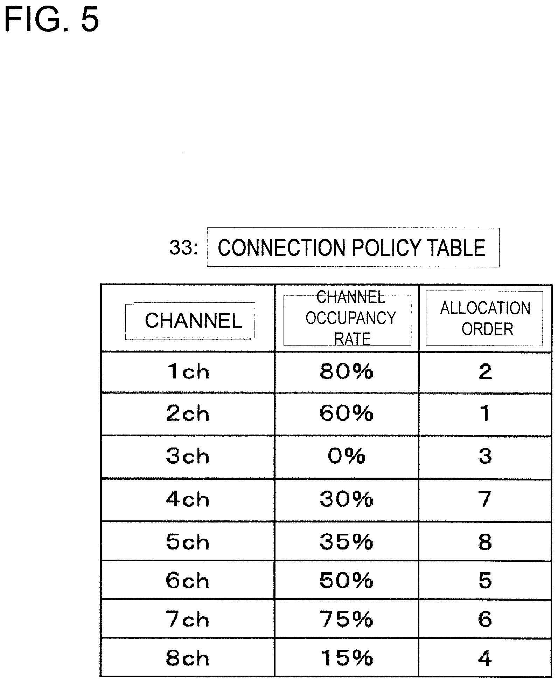

The connection policy table 33 prescribes a communication bandwidth status of each channel and a priority given to a channel, for each wireless system. As illustrated in Fig. 5, the connection policy table 33 may be configured to include information such as channel, the channel occupancy rate (channel utilization), and channel allocation order. The connection policy table 33 may further include other items of information such as channel stability.

The data attribute information collection means 13 includes a data attribute acquisition part 131. The data attribute information collection means 13 may be realized by an apparatus (for example a server apparatus) that controls an application or by a function of software on a cloud. The data attribute acquisition part 131 acquires attribute information of data handled by the wireless system, which may include for each wireless system, data type handled by the wireless system, data transmission interval (data transmission interval from a terminal, etc.), data amount (communication speed), and delay budget may be included. The data type may be specific information indicating what the data represents (for example based on data information prescribed in an application), or may be identification information about data handling, for example, retransmission-allowed, or discarding-enabled.

The data attributes of the wireless system 2 acquired by the data attribute acquisition part 131 are set in a data attribute table 34 of the access point 3 in the wireless system 2.

The wireless system 2 includes the access point 3 and the terminals 4, 4a, 4b.... The number of the terminals 4, 4a, 4b... is one or more. A plurality of wireless apparatuses (the terminals (4, 4a, 4b...) and the access point 3) in the wireless system 2 communicate with each other using the same frequency channel.

The access point 3 includes a connection rule setting means (connection rule setting unit) 31 and a connection execution means (connection execution unit) 32. The connection rule setting means 31 includes a connection rule generation part 311 that generates the connection rule information table 35 by referring to the setting information in the connection policy table 33 and the data attribute table 34. The connection rule information table 35 may be held in a storage apparatus 36, as with the connection policy table 33 and the data attribute table 34. The storage apparatus 36 may be constituted by, for example, an EEPROM, HDD, or SSD (Solid State Drive). Further, as a matter of course, the connection rule setting means 31 does not have to be implemented within the access point 3 and may be configured as a separate node apparatus (control apparatus) that communicates with the access point 3 in the wireless system 2. The connection rule information table 35 may also be held in, for example, an EEPROM, HDD or SSD.

The connection execution means 32 includes a connection execution processing part 321. The connection execution processing part 321 selects a destination frequency channel according to the channel switching order (priority) set in the connection rule information table 35 when a frequency channel is switched. The connection execution processing part 321 makes a wireless connection using the switching destination frequency channel after the waiting time set in the connection rule information table 35 has elapsed.

More specifically, the connection execution processing part 321 starts a timer (first timer), not illustrated in the drawing, that counts the waiting time at a timing of switching a frequency channel. If communication using the next destination frequency channel is possible, the connection execution processing part 321 starts communication using the frequency channel selected as the switching destination channel when the timer (first timer) times out (i.e., the waiting time has elapsed).

When the frequency channel selected as the destination is congested because the other wireless systems (2a, 2b, ...) are using it and the connection execution processing part 321 determines that communication is not possible, a next frequency channel is selected according to the channel switching order (priority) set in the connection rule information table 35. Then the connection execution processing part 321 checks whether or not communication using the next frequency channel is possible, and if so, the connection execution processing part 321 starts communication after the waiting time has elapsed.

When determining whether or not communication using the switching destination frequency channel is possible, the connection execution processing part 321 may measure a channel occupancy rate (also referred to as "channel utilization") of the switching destination frequency channel by the other wireless system(s) during the waiting time set in the connection rule information table 35. The connection execution processing part 321 may be configured to determine whether or not communication using the switching destination frequency channel is possible based on the measurement result. Here, the channel occupancy rate is a ratio of a time during which a channel is occupied by the other wireless system(s) over a predetermined observation time (fixed time period). The following equation uses percentage as a unit of the channel occupancy rate, but the unit does not have to be percentage.

$$\text{Channel occupancy rate} = (\text{channel occupancy time})/(\text{observation time}) \times 100(\%) \qquad (1)$$

During the waiting time, the access point 3 (the terminal 4) in the wireless system 2 is set to a reception mode. The connection execution means 32 may calculate the channel occupancy time (the communication time using the channel) based on the time during which the reception power of the monitored channel exceeds a predetermined fixed threshold value. The predetermined observation time (fixed time period) for measuring the channel occupancy rate may be a time interval of the beacon signal (beacon packet) transmitted periodically by the other wireless system(s).

The lower the channel occupancy rate, the longer time during which the other wireless system(s) are not using the switching destination frequency channel within a fixed time period (observation time). In other words, the lower the channel occupancy rate of the switching destination frequency channel, the higher the probability of being able to perform communication using the switching destination frequency channel. Conversely, the higher the channel occupancy rate, the longer time during which the other wireless system(s) are using the switching destination frequency channel within a fixed time period (observation time). In other words, the higher the channel occupancy rate of the switching destination frequency channel, the lower the probability of being able to perform communication using the switching destination frequency channel. The connection execution means 32 may be configured to include a timer (a second timer different from the timer that counts the waiting time) that counts the observation time for measuring the channel occupancy rate.

When determining whether or not communication using the switching destination frequency channel is possible based on a measurement result of the channel occupancy rate, the connection execution processing part 321 may be configured to do so based on the result of measuring the channel occupancy rate and a data amount set in the data attribute table 34 described below (for example, a communication speed required to transfer data handled by an application using the channel). The description below is based on a simple calculation model.

For example, assuming that CO (in percentage terms) denotes a measured value of a channel occupancy rate of a switching destination frequency channel by the other wireless system(s) (2a, 2b, ...), A (bps) denotes a communication speed of the channel (a predetermined ratio (for example a half or less) of a nominal communication speed rate (maximum transfer rate, theoretical value), and D (bps) denotes a data amount to be transferred, the following gives a ratio of a time (use time per unit time) that wireless system 2 uses for data transfer on the channel (where $0 < D < 1$).

$$B = D/A \qquad (2)$$

$$E = 1 - CO/100 - \alpha \qquad (3)$$

(where $\alpha$ is a predetermined margin ($0 \leqq M < 1$); a value with the packet header overhead taken into account)
The above equation gives a ratio of a time when the switching destination frequency channel is available (available time per unit time) to the wireless system 2, calculated based on the channel occupancy rate.

When E/B is greater than a predetermined threshold value (1 or more), the connection execution processing part 321 may determine that communication using the switching destination frequency channel is possible, and when E/B is less than or equal to the predetermined threshold value, the connection execution processing part 321 may determine that communication is not possible.

It is noted that the connection execution processing part 321 of the connection execution means 32 determines that communication using the switching destination frequency channel is possible and starts communication using the switching destination frequency channel after the waiting time has elapsed. At this time, when the access point 3 or the terminal 4, which is going to transmit data using the frequency channel, detects that the other wireless system communicates using the same frequency channel, the connection execution means 32 may transmit data after the communication by the other wireless system has completed. The connection execution means 41 of the terminal 4 may do the same.

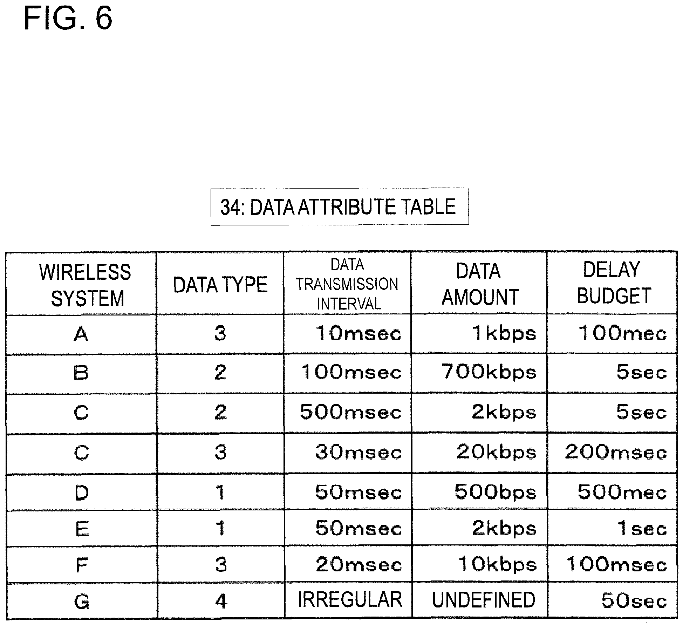

The data attribute table 34 prescribes the attribute information of data handled by the wireless system. In an example illustrated in Fig. 6, the data attribute table 34 includes, for each wireless system, the data type handled by the wireless system (1, 2, 3, 4, ... in Fig. 6), data transmission interval, data amount (required bandwidth (unit: kbps (kilo bits per second)), and delay budget (unit: msec (milliseconds)), though limited thereto. The data transmission interval and the data amount may be set within a certain range (maximum, minimum). Further, for the data transmission interval and the data amount, representative values or statistical values (mean value, variance, etc.) may be set.

In the data attribute table 34, the data type (represented by 1, 2, 3, 4, etc., for the sake of convenience in Fig. 6) may be specific information indicating what the data represents. The data type may be content and data type handled by an application (for example, measurement data and streaming data (multimedia data such as video and audio) from terminals, emails from terminals, tweet data, social networking service (SNS) data, or voice packet data (for example, packets over a Voice Over IP (Internet Protocol) (VoIP) application), online game data, etc.), though limited thereto. Alternatively, it may include identification information about data handling, for example, allowing retransmission, or indicating that the data can be discarded without retransmission depending on the application specification and its protocol, etc.

The data transmission interval, data amount (communication speed), and delay budget in the data attribute table 34 may be set based on, for example, information provided by the attribute information of the data collection means 13 (for example, an apparatus that manages an application on a cloud) of the management apparatus 1. For example, in case where a terminal communicates with an application on a server via a wireless system, these items may be set based on a bandwidth and a latency required to meet, for example, a QoE requirement of the application on the terminal (user terminal). The data amount (communication speed) may be set based on a measurement result at the access point 3.

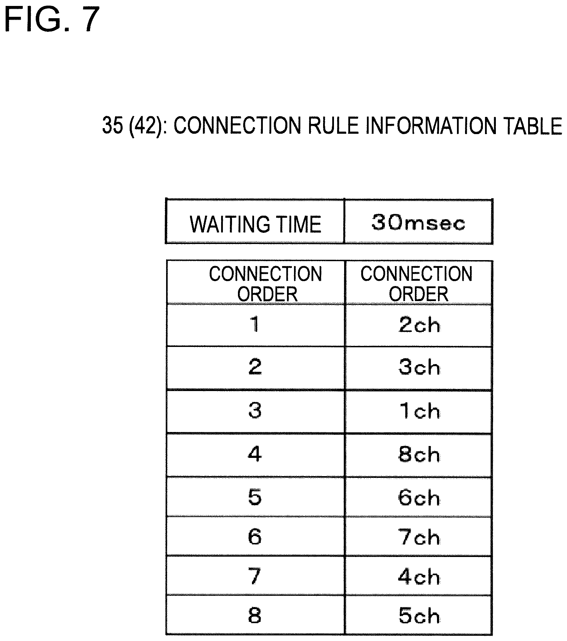

The connection rule information table 35 prescribes the information shared by the access point 3 and the terminal 4 in each wireless system. As illustrated in Fig. 7, the table includes determination time, waiting time, and information on the connection order of frequency channels in the wireless system (information about the order of channels to be connected). The waiting time is a time period as from a time when a channel switching instruction is issued or when it is determined that communication with the terminal 4 has been disconnected, to a time when the access point 3 actually switches a frequency. Other relevant items of information may be included as the waiting time.

The terminals 4, 4a, 4b, ... may be configured to include a connection rule information table 42 and the connection execution means 41. The connection execution means 41 may be configured to include a connection execution processing part 411 that, when performing frequency channel switching, selects a next frequency channel in accordance with the priority set in the connection rule information table 42, and performs a channel switching operation to make a wireless connection after an elapse of the waiting time set in the connection rule information table 42. The terminals 4, 4a, 4b, ... may be IoT devices, MTC (Machine Type Communication) devices, mobile communication terminals such as smartphones, tablet terminals, notebook personal computers (PC), etc., as long as they are able to wirelessly connect to the access point 3. The connection rule information table 42 may be held in, for example, an EEPROM or HDD, etc.

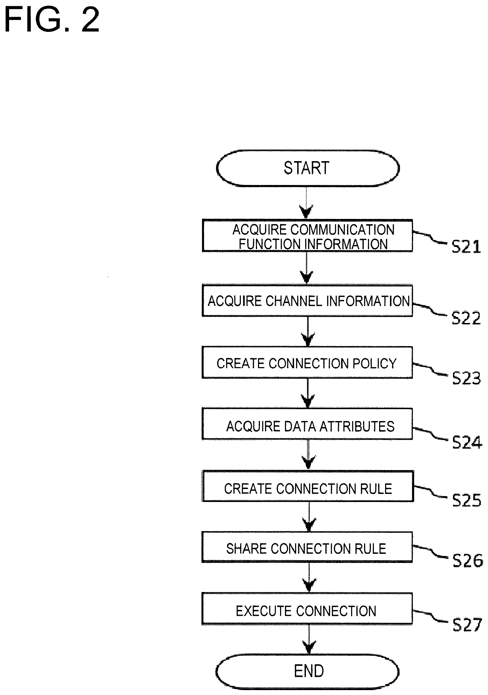

Fig. 2 is a flowchart for explaining an example of the operation of the first example embodiment whose configuration was described with reference to Fig. 1. An example of the operation of the first example embodiment will be described below with reference to Figs. 1 and 2.

In the management apparatus 1, the communication function information acquisition part 111 of the network connection information collection means 11 acquires information regarding the communication functions of the access point 3 and the terminal 4 constituting each of the wireless systems 2, 2a, 2b, ... connected to the management apparatus 1 (step S21).

In the management apparatus 1, the channel information acquisition part 112 of the network connection information collection means 11 acquires channel information (step S22). The network connection information collection means 11 stores the acquired information in the access point communication function information table 14, the terminal communication function information table 15, and the channel information table 16. The communication function information acquisition part 111 and the channel information acquisition part 112 of the network connection information collection means 11 acquire the communication function information and the channel information of the access point 3 and terminal 4 periodically or when a predetermined event occurs, and update the access point communication function information table 14, the terminal communication function information table 15, and the channel information table 16.

In the management apparatus 1, the connection policy generation part 121 of the network connection management means 12 creates a connection policy by referring to the access point communication function information table 14, the terminal communication function information table 15, and the channel information table 16 (step S23).

Further, in the management apparatus 1, the attribute information of the data collection means 13 includes the data attribute acquisition part 131 that acquires the attribute information of data handled by each wireless system (step S24).

The access point 3 of the wireless system 2 receives the connection policy and the data attributes generated in the management apparatus 1 and stores them in the connection policy table 33 and the data attribute table 34.

The connection rule setting means 31 of the access point 3 refers to the connection policy table 33 and the data attribute table 34, creates the connection rule, and stores it in the connection rule information table 35 (step S25).

The terminal 4 receives the information in the connection rule information table 35 of the access point 3, and sets and holds the information in the connection rule information table 42 (step S26). The connection rule information table 42 is a copy of the connection rule information table 35 of the access point 3, and for example, it is forwarded from the access point 3 to the terminal 4. When the connection rule setting means 31 in the access point 3 updates the waiting time or channel switching order in the connection rule information table 35, the access point 3 transmits the connection rule information table 35 to the terminal 4 and the terminal 4 replaces the old content of the connection rule information table 42 with the updated content of the connection rule information table 35. Further, the access point 3 may transmit only an updated portion of the connection rule information table 35 to the terminal 4 so that the terminal 4 can update only a corresponding portion in the connection rule information table 42 with the updated content.

In the access point 3, the connection execution processing part 321 of the connection execution means 32 refers to the setting information (the waiting time, the channel connection order) in the connection rule information table 35, etc., performs channel switching, and makes a wireless connection, when a channel switching instruction is issued, or the communication with the terminal is disconnected (step S27).

Also, in the terminal 4, the connection execution processing part 411 of the connection execution means 41 may refer to the setting information (the waiting time, the channel connection order) in the connection rule information table 42, perform frequency channel switching, and make a wireless connection.

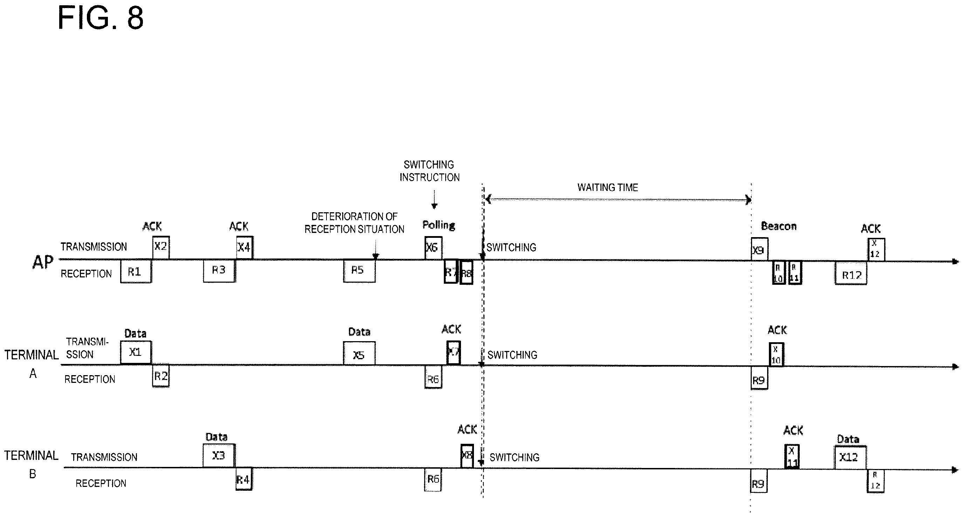

Fig. 8 is a diagram illustrating an example of the operation of the access point 3 and a plurality of terminals (4, 4a, 4b, ... in Fig. 1) when a channel is switched in the first example embodiment. It is noted that two terminals A and B are illustrated in Fig. 8 for the sake of simplicity. Fig. 8 shows an operation in which the two terminals (the terminals A and B that may correspond to, for example, 4 and 4a in Fig. 1) transmit collected data to the access point (3 in Fig. 1; abbreviated as "AP" in Fig. 8) with a time series diagram.

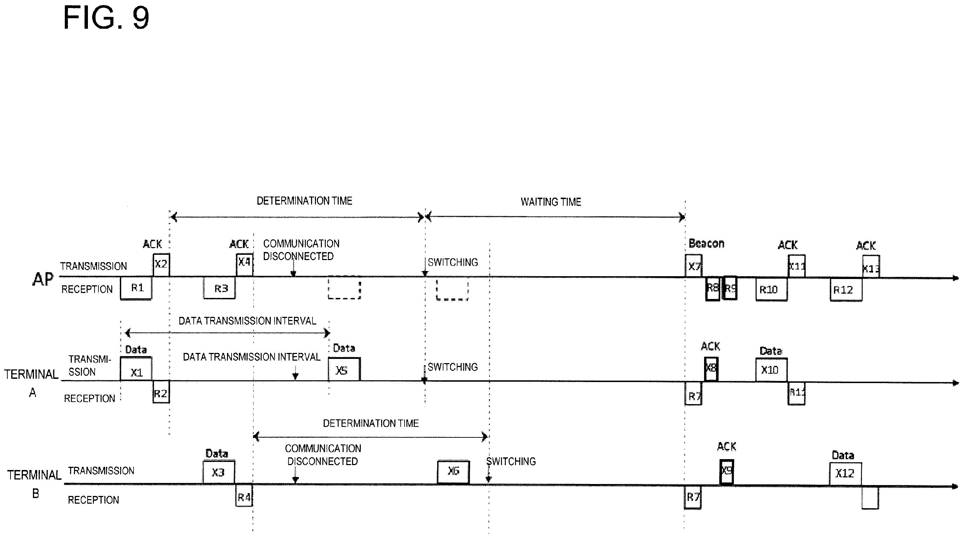

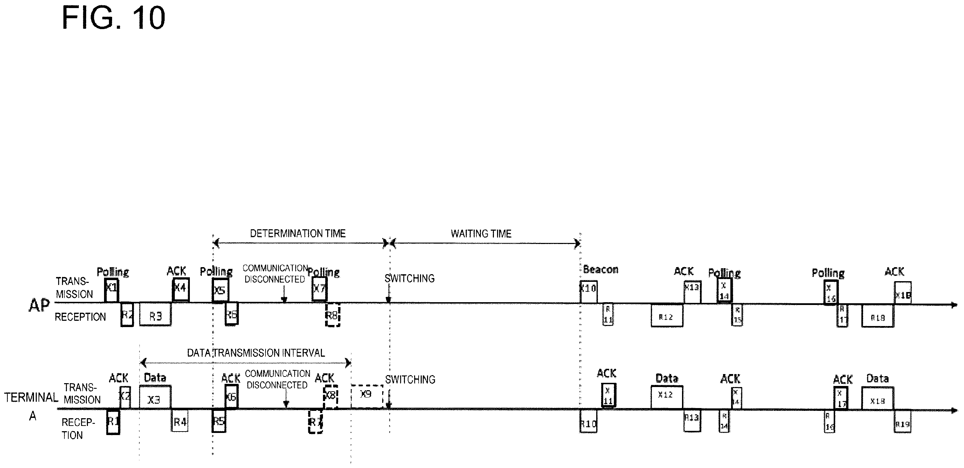

In Fig. 8, $X_i$ ($i = 1, 2, ...$) denotes a sequence number of a transmitted signal, and $R_i$ ($i = 1, 2, ...$) denotes a sequence number of a signal of a reception side of the signal Xi. It should be understood that in Fig. 8, there are not illustrated all of sequences of transmission/reception between the AP and the terminals in Fig. 8 (and Figs. 9 and 10 described later) for convenience of drawing creation and some typical handshakes are illustrated. Further, in the description with reference to Fig. 8 below, the access point 3 in Fig. 1 will be referred to as "AP" in correspondence with notation in Fig. 8.

The terminal A transmits data (X1) to the AP, which receives data (R1). The AP transmits an acknowledgement (ACK) (X2) indicating that the data has been received to the terminal A, which receives the ACK (R2).

The terminals A and B transmit data to the AP as appropriate, but when a reception situation deteriorates (refer to an arrow after the AP receives a signal (R5)), the AP transmits a channel switching instruction (Polling) (X6) to the terminals A and B.

Channel switching may be determined by the AP or a channel switching instruction may be received by the AP from the management apparatus (1 in Fig. 1) connected to the AP. Further, the management apparatus (1 in Fig. 1) may issue a channel switching instruction to the AP in an appropriate wireless system based on a request from another wireless system or information, from a channel monitoring apparatus separately provided (not illustrated in the drawing).

When a channel switching instruction is issued, the AP (the connection execution means 32 in Fig. 1) selects a frequency channel based on the setting information in the connection rule information table (35 in Fig. 1) and performs the frequency channel switching after the waiting time has elapsed.

During this time, the AP enters into a reception mode. At this time, the AP measures a communication status of the frequency channel, for example, a channel occupancy rate (channel utilization). The connection execution means (32 in Fig. 1) of the AP may be configured to include a measurement unit that measures the channel occupancy rate by monitoring packets (frames) at least in the frequency channel which is selected as the switching destination. Alternatively, the channel information acquisition part 112 of the network connection information collection means 11 of the management apparatus 1 may receive a request from the access point 3 in a relevant wireless system, measure a channel occupancy rate of the frequency channel by monitoring packets (frames) captured by the access point 3, and notify the AP of the wireless system that performs channel switching while storing a measurement result in a corresponding entry of the channel information table 16.

The AP determines whether or not communication using this channel is possible, i.e., whether or not a bandwidth can be stably and sufficiently secured, when the waiting time prescribed in the connection rule information table 35 has elapsed and starts communication if the communication is possible. When communication is difficult, the AP selects a next ranking frequency channel in the connection rule information table 35 and tries to start communication.

When starting communication after the frequency channel switching, the AP periodically transmits (broadcasts) a beacon (X7) to the terminals A and B in the wireless system. Upon reception of the beacon, the terminals A and B transmit to the AP an inquiry (probe request) inquiring whether or not it is, for example, a network identifier of the wireless system (for example, ESS-ID (Extended Service Set Identifier), a network identifier in a wireless LAN (Wi-Fi, etc.), etc.) set by, for example, the terminals themselves. When it is the same network identifier, the AP returns a response (probe response). The terminals transmit a connection request (association request) to the AP, which returns an association response. The AP and the terminals begin to communicate thereafter.

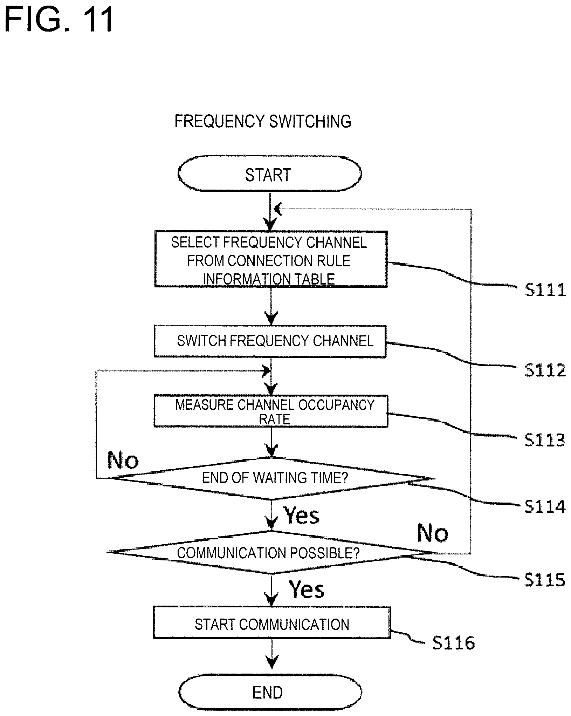

Fig. 11 is a diagram describing the frequency channel switching operation (the connection execution means 32 of the access point 3 or the connection execution means 41 of the terminal 4 in the wireless system 2 in Fig. 1) according to the first example embodiment. Below, an operation example of the connection execution means 32 of the access point 3 will be discussed following the description of Fig. 8 (the same applies when the connection execution means 41 of the terminal 4 performs frequency channel switching).

In the wireless system 2, when switching a frequency channel, the connection execution means 32 of the access point 3 refers to the connection rule information table 35 and select a switching destination frequency channel (step S111).

The connection execution means 32 of the access point 3 performs frequency channel switching (step S112).

The access point 3 enters into a reception mode during the waiting time prescribed in the connection rule information table 35. During this time, the access point 3 measures a channel occupancy rate as a communication status of the wireless system (steps S113 and S114). As the channel occupancy rate, a channel occupancy rate of the switching destination frequency channel by the other wireless system is measured.

It is noted that the channel occupancy rate of the switching destination frequency channel may be measured by a communication monitoring part (not illustrated in the drawing), which may be provided in the connection execution means 32 of the access point 3. Alternatively, depending on a length of the waiting time, the channel information acquisition part 112 of the management apparatus 1 in Fig. 1, upon reception of a measurement request from the access point 3, may measure the channel occupancy rate of the switching destination in the wireless system 2, to which the access point 3 belongs, and notify the access point 3 of a measurement result. As discussed above, the channel occupancy rate is derived by, for example, dividing a time (channel occupancy time) during which the other wireless systems (for example 2a, 2b, ... in Fig. 1) uses the switching destination frequency channel by an observation time. The channel occupancy rate indicates how crowded the channel is.

After the waiting time has elapsed, the connection execution means 32 of the access point 3 checks whether or not communication using the switching destination channel is possible (step S115). For example, based on the measurement result of the channel occupancy rate of the switching destination frequency channel, the connection execution means 32 of the access point 3 determines that communication using the switching destination channel is possible, when the channel occupancy rate indicates that the channel can accommodate an additional data amount obtained by referring to the data attribute table 34, and when the channel occupancy rate exceeds a predetermined threshold value, the connection execution means 32 determines that communication using the switching destination frequency channel is not possible.

When communication using the switching destination frequency channel is not possible (No in the step S115), the connection execution means 32 of the access point 3 refers to the connection rule information table 35 and selects a next destination frequency channel (step S111).

When communication is possible (Yes in the step S115), the connection execution means 32 of the access point 3 starts communication using the switching destination frequency channel (step S116).

For example, when there coexist a plurality of wireless systems in a closed space, communication cannot be continued due to a dynamic change in a wireless environment. As a result, an available frequency channel is required. It takes time, however, to search for an available frequency channel by sweeping frequencies.

According to the first example embodiment, it becomes possible to autonomously and quickly perform frequency channel switching, since destination frequency channel candidates (next frequency channel to which the current frequency channel is switched) are set in the connection rule information table 35 in advance and the access point 3 and the terminal 4 share information of the switching destination frequency channel candidates.

Further, when a plurality of wireless systems try to perform frequency channel switching, there may be a case in which it takes time due to a possible conflict among a destination frequency channel.

Fig. 12 is a diagram illustrating an example of frequency channel switching (an example in which the waiting time is not set in accordance with the priority of the wireless systems). As schematically illustrated in Fig. 12, a wireless system A is using frequency channel 1 (referred to as "CH1") and a wireless system B is using frequency channel 2 (referred to as "CH2"). Let's assume that CH1, CH2, and frequency channel 3 (referred to as "CH3") are not available anymore due to an influence of noise, etc.

The wireless system A switches from CH1 to CH3. The wireless system A does not know that CH3 is not available. For example, during waiting time Tw, the wireless system A checks whether or not communication is possible using CH3. The wireless system A may measure a channel occupancy rate of CH3 and check whether or not communication is possible using CH3 based on a measurement result during the waiting time Tw.

The wireless system A determines that communication using CH3 is not possible, then switches to frequency channel 4 (referred to as "CH4"), and checks whether or not communication is possible using CH4, for example, during the waiting time Tw. The wireless system A may measure a channel occupancy rate of CH4 and check whether or not communication is possible using CH4 based on a measurement result during the waiting time Tw.

The wireless system B switches from CH2 to CH4. Since communication using CH4 is possible, the wireless system B starts communication using CH4 after time Tb has elapsed since the channel switching timing. It is noted that that, for example, Tb = Tw in Fig. 12 (Tb may be less than Tw), though limited thereto.

Since the wireless system B started communication using CH4 after an elapse of the time Tb from the channel switching timing, the wireless system A is not able to start communication using CH4, either, after an elapse of time Tw + Tw1 from the channel switching timing and selects a next destination frequency channel 5 (referred to as "CH5"). In Fig. 12, Tw1 is a waiting time of the wireless system A for CH4. Tw1 may be equal to Tw. In other words, when the waiting time set for the wireless system A is the same for each channel in the connection rule information table 35, Tw1 = Tw.

The wireless system A determines that communication using CH5 is possible based on a channel occupancy rate of CH5, and starts communication using CH5 after an elapse of approximate time Tw + Tw1 + Tw2 from the channel switching timing. In Fig. 12, Tw2 is a waiting time of the wireless system A for CH5. Tw2 may be equal to Tw.

In this case, the wireless system A performs channel switching three times, thus increasing switching time Ta for reconnection (Ta ≒ Tw + Tw1 + Tw2).

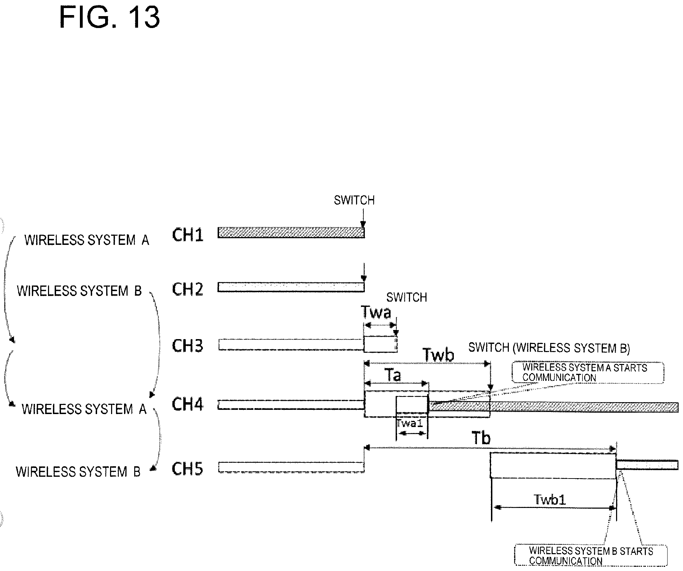

According to the first example embodiment, the priority level that reflects the data attributes is prescribed as the waiting time. As illustrated in Fig. 13, according to the first example embodiment, the waiting time of the wireless system A with high priority is reduced ($0 \leqq$ Twa < *Twb*) where Twa and Twb are the waiting times of the wireless systems A and B, respectively.

With these settings, the wireless system A is able to preferentially find the channel CH4 capable of communicating. In other words, the wireless system A selects CH3. For example, during the waiting time Twa, the wireless system A checks whether or not communication is possible using CH3. In this case, since CH3 is not available, the wireless system A selects the next destination channel CH4 based on the order set in the connection rule information table 35 after an elapse of the waiting time Twa from the channel switching timing.

For example, during the waiting time Twa1, the wireless system A checks whether or not communication is possible using CH4. The wireless system A measures a channel occupancy rate of CH4 by other wireless systems over a fixed time period. Based on a measurement result of the channel occupancy rate of CH4 and taking into account, for example, a bandwidth or the like required by an application, the wireless system A determines that communication using CH4 is possible when a sufficient bandwidth or the like is provided (can be accommodate) by CH4. In this case, since communication using CH4 is possible, the wireless system A starts communication using CH4 as the waiting time Twa1 ends.

A time (switching time) that is takes for the wireless system A to switch to CH4 and start communication from the switching timing of a frequency channel is Ta ($\fallingdotseq$ Twa + Twa1).

Note that the waiting time Twa1 of the wireless system A for CH3 may be equal to Twa. When the waiting time set for the wireless system A is the same for each channel in the connection rule information table 35, Twa1 = Twa. When the waiting time Twa of the wireless system A is zero, the wireless system A may measure a channel occupancy rate of the switching destination frequency channel over a predetermined fixed time period at the same time as the channel switching timing, determine whether or not communication using the switching destination frequency channel is possible based on a measurement result, and immediately start communication using the switching destination frequency channel if communication is possible.

The wireless system B selects CH4 at the channel switching timing and waits for CH4 (the waiting time Twb), but during this time, the wireless system A with higher priority starts communication using CH4. Since the wireless system A has started communication using CH4, the wireless system B determines that CH4 is not available based on a measurement result of a channel occupancy rate indicating a ratio of the time during which CH4 is occupied by the wireless system A which is the other wireless system, and switches to CH5, a next destination channel. The wireless system B measures a channel occupancy rate of CH5 by other wireless systems during waiting time Twb1.

In this case, since CH5 is not used by other wireless systems (the channel occupancy rate = 0), communication using CH5 is started after the waiting time Twb1 has elapsed (time Tb required for reconnection is approximately equal to Twb + Twb1). Note that the waiting time Twb1 of the wireless system B for CH5 may be equal to the waiting time Twb. In other words, when the waiting time set for the wireless system B is the same for each channel in the connection rule information table 35, Twb1 = Twb.

In Fig. 13, both wireless systems A and B switch the frequency twice, but the reconnection time is shorter for the wireless system A (Ta < Tb).

As described, according to the first example embodiment, it becomes possible to prioritize a wireless system requiring, for example, a shorter delay time and have the system autonomously recover communication with a short communication interruption time by setting different waiting times based on the priority for wireless systems.

Each means, each function, and each table described above may be appropriately distributed among the wireless apparatus and the wireless system to the extent that the operation is not hindered. Some functions of the network connection information collection means 11 and the network connection management means 12 of the management apparatus 1 may be integrated into any of the wireless systems. Alternatively, they may be connected to the access point 3 or integrated together. Further, some functions of the connection rule setting means 31, the storage apparatus 36, and the connection execution means 32 in the wireless system 2 may be implemented in an apparatus different from the access point 3.

<Second Example Embodiment>

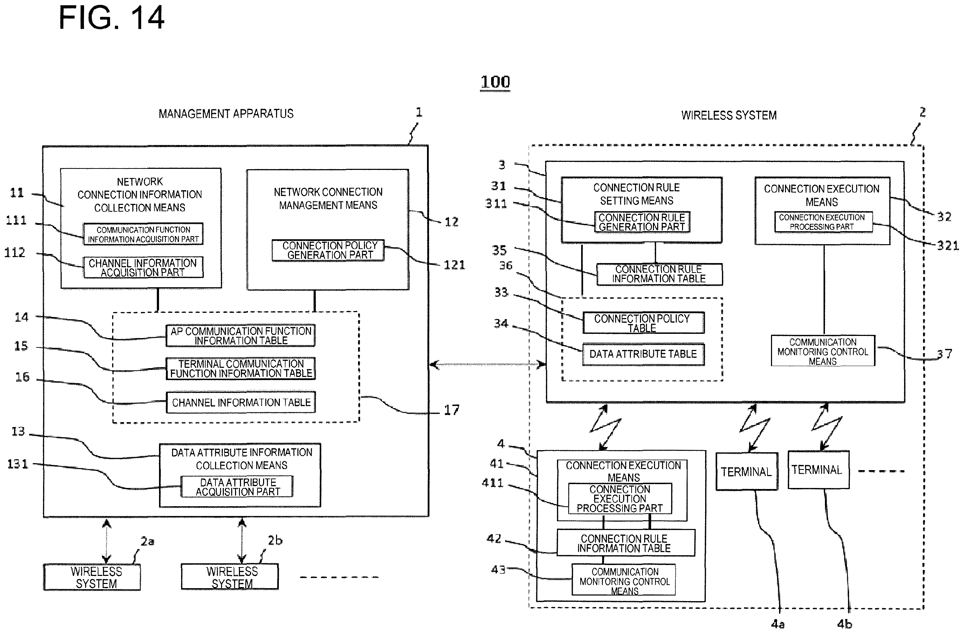

Fig. 14 is a diagram illustrating a configuration example of a second example embodiment. In the second example embodiment, communication monitoring control means 37 (communication monitoring control part) is added to the access point 3 of the first example embodiment described with reference to Fig. 1. Further, communication monitoring control means 43 (communication monitoring control part) may be added to the terminal 4.

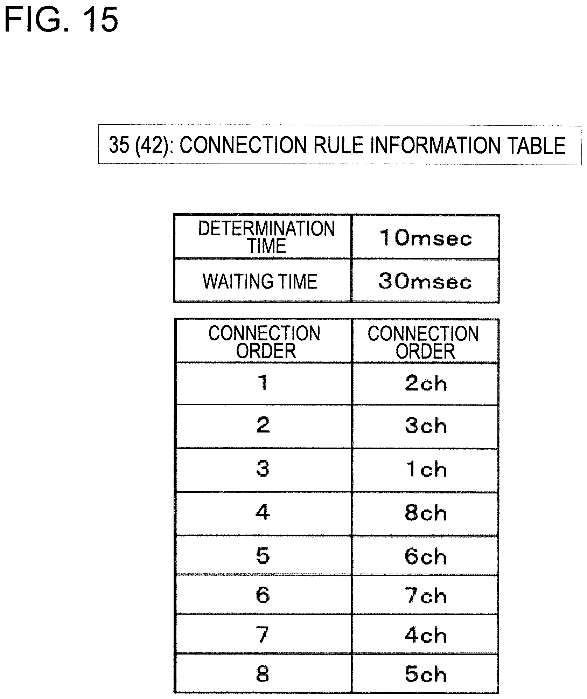

Fig. 15 is a diagram schematically illustrating the configuration of the connection rule information table 35 (42). As illustrated in Fig. 15, a determination time for determining that communication between the access point 3 and the terminal (4, 4a, 4b, ...) has been disconnected is set in the connection rule information table 35 (42). The access point 3 and the terminals (4, 4a, 4b, ...) share the connection rule information table 35 (42). The access point 3 may transmit the connection rule information table 35 to the terminal 4, for example, when the terminal 4 establishes a connection, and the terminal 4 may hold it as the connection rule information table 42. Alternatively, the access point 3 may transmit the connection rule information table 35 to the terminal 4 during any time period in which the access point 3 and the terminal 4 are connected and communicate with each other. Further, the connection rule information table 35 (42) may be configured to include other items of information associable with the determination time.

In the second example embodiment, the configurations of the apparatuses other than the access point 3 and the terminals (4, 4a, 4b, ...) are the same as those in the first example embodiment. Further, the tables other than the connection rule information table 35 (42) are the same as those described with reference to Figs. 3 to 6.

In the second example embodiment, the operation when a disconnection occurs in communication between the AP and the terminals is different from the first example embodiment. In the second example embodiment, the determination time (time during which communication is monitored) is preferably set longer than, for example, a data transmission interval from each of the terminals 4. It is noted that the data transmission interval is set in the data attribute table 34.

Fig. 9 is a diagram illustrating channel switching in the second example embodiment, and notations follow Fig. 8 of the first example embodiment. With reference to Fig. 9, the communication monitoring control means 37 of the access point 3 monitors a data transmission interval for each communication data item between the access point (AP) 3 and the terminal A. For example, the data transmission interval is a time interval between transmission of data (Data) (X1) and transmission of next data (Data) (X5) from the terminal A.

When detecting at least one exchange of data such as a data transmission (Data) from the terminal and an acknowledgement (ACK) from the AP on a receiver side, which indicates reception confirmation during the determination time set in the connection rule information table 35, the communication monitoring control means 37 of the access point 3 continues communication between the AP and the terminal using a current frequency channel without switching the frequency channel.

When the communication monitoring control means 37 of the access point 3 does not detect any data exchange such as a data transmission (Data) from the terminal and an acknowledgement (ACK) indicating reception confirmation during the set determination time, the communication monitoring control means 37 determines that a disconnection has occurred in the channel and instructs the connection execution means 32 to perform frequency channel switching.

The connection execution means 32 selects a next ranking frequency channel from the connection rule information table 35 (42), and performs frequency channel switching. In Fig. 9, the waiting time, beacon transmission, etc., after the switching are the same as in the first example embodiment. Further, the communication monitoring control means 43 on a terminal side may instruct the connection execution means 41 to perform the frequency channel switching and select a next ranking frequency channel from the connection rule information table 42, when detecting a communication disconnection.

In the second example embodiment, depending on setting of the determination time and the data transmission interval, it is possible to determine the number of times of unsuccessful transmission/reception which is assumed to trigger frequency channel switching. In Fig. 9, at the timing when the access point (AP) receives data (Data) from the terminal A and transmits an acknowledgement (ACK) (X2), the communication monitoring control means 37 (Fig. 14) of the access point (AP) starts a timer (third timer, not illustrated in the drawing) that counts the determination time, though limited thereto. Then the communication monitoring control means 37 (Fig. 14) of the access point (AP) may check whether or not at least one acknowledgment (ACK) of data (Data) has been transmitted/received to/from the terminal when the timer (third timer) times out.

Further, since the frequency channel of the access point (AP) has been switched (the terminals A and B use the same channel when communicating with the AP), the transmission/reception by the terminal B will not be successful. The terminal B selects a next ranking frequency channel based on the channel switching order set in the connection rule information table 35 and performs frequency channel switching. The terminal B preferably performs the frequency channel switching within the duration of the waiting time. The waiting time is preferably set longer than the determination time.

In Fig. 9, the transmission interval of data (Data) transmitted by each terminal to the access point is equal, however, the transmission interval of data (Data) transmitted by each terminal to the access point may be different to each other. In this case, the determination time is preferably even longer than the longest data transmission interval.

<Third Example Embodiment>

A third example embodiment, wherein a communication disconnection time is reduced when communication between the AP and the terminal is disconnected and low latency is particularly requested, as with the second example embodiment, will be described below. It is noted that the configurations of the apparatuses are the same as those in the second example embodiment described with reference to Fig. 14. Further, the connection rule information table 35 (42) is the same as that in the second example embodiment described with reference to Fig. 15. The other tables are the same as those in the first example embodiment.

Fig. 10 is a diagram illustrating frequency channel switching in the third example embodiment. Fig. 10 illustrates communication between the terminal A and the AP. With reference to Fig. 10, the AP transmits transmission requests (Polling) (X5, X7) and the terminal A transmits an acknowledgement (ACK) (X6) that is a confirmation of the reception (R5) by the terminal A, at a predetermined time interval which is shorter than the data transmission interval.

When transmission of Polling from the AP and transmission/reception of the acknowledgement (ACK) from the terminal A are performed at the predetermined time interval over the determination time set in the connection rule information table 35, the communication monitoring control means 37 of the access point 3 continues communication using a current frequency channel (does not output an instruction to perform frequency channel switching to the connection execution means 32).

When the transmission of the transmission request (Polling) from the AP and the transmission/reception of the acknowledgement (ACK) from the terminal A are not performed at the predetermined time interval (shorter than the data transmission interval) over the determination time set in the connection rule information table 35, the communication monitoring control means 37 of the access point 3 determines that a disconnection has occurred in the channel and instructs the connection execution means 32 to perform frequency channel switching. The communication monitoring control means 37 of the access point 3 may be configured to include a timer for counting the predetermined time interval which is shorter than the data transmission interval.

In the example illustrated in Fig. 10, the communication monitoring control means 37 of the access point 3 determines that the channel has been disconnected once detecting that the transmission/reception of Polling and the acknowledgement is not performed within the predetermined time period shorter than the data transmission interval, however, the communication monitoring control means 37 may determine that the channel has been disconnected when detecting a predetermined number of times (more than once) over the determination time that the transmission/reception of Polling and the acknowledgement is not performed within the predetermined time period.

The connection execution means 32 selects a next ranking frequency channel from the connection rule information table 35 (42) and performs frequency channel switching. When detecting a communication disconnection, the communication monitoring control means 43 on the terminal side may instruct the connection execution means 41 to perform the frequency channel switching, by prompting the connection execution means 41 to select a next ranking frequency channel from the connection rule information table 42.

In the third example embodiment, it is possible to determine the number of times of unsuccessful transmission/reception (the transmission/reception of Polling and the acknowledgement within a predetermined time period shorter than the data transmission interval) which is assumed to trigger frequency channel switching.

According to the third example embodiment, since the determination time is set shorter than the data transmission interval, a frequency channel can be switched more quickly than in the second example embodiment when a communication disconnection occurs.

In the example embodiment described above, a frequency channel is switched based on an instruction. In the second and the third example embodiments, frequency channel switching may be performed upon detection of a communication disconnection. Further, the first, the second, and the third example embodiments may be operated simultaneously.

<Fourth Example Embodiment>

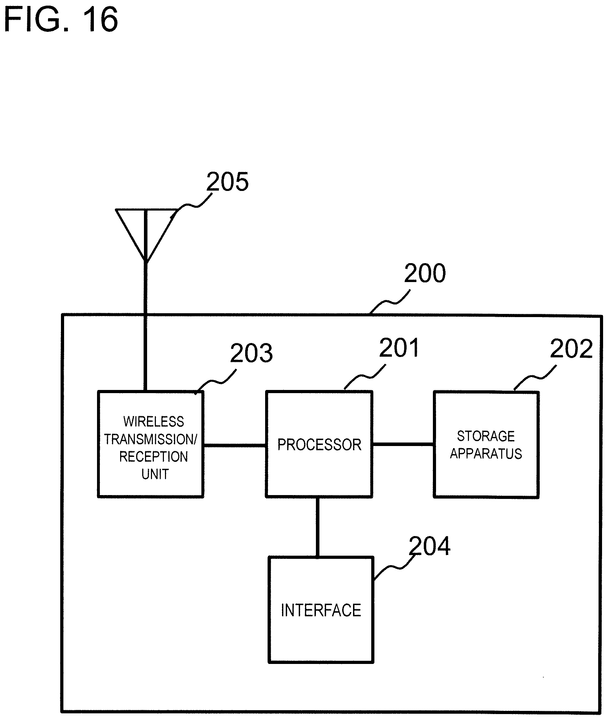

As illustrated in Fig. 16, the wireless apparatus (access point 3) may be implemented in a computer apparatus 200. With reference to Fig. 16, the computer apparatus 200 includes a processor (CPU (Central Processing Unit), data processing device) 201, a storage apparatus 202 that includes at least one of a semiconductor memory (for example, RAM (Random Access Memory), ROM (Read Only Memory), or EEPROM (Electrically Erasable and Programmable ROM), etc.), HDD (Hard Disk Drive), CD (Compact Disc), DVD (Digital Versatile Disc), etc., a wireless transmission /reception unit 203 connected to an antenna 205, and an interface 204. The access point 3 in Figs. 1 and 14 may be configured to connect to and communicate with the management apparatus 1 via the interface 204. The wireless transmission unit of the wireless transmission/reception unit 203 converts a digital signal outputted from, for example, the processor 201 to an analog signal, power-amplifies an RF (Radio Frequency) signal obtained by up-converting the analog signal to a radio frequency, and transmits a resultant RF signal from the antenna 205. The wireless reception unit low-noise amplifies an RF signal received by the antenna 205 and down-converts a signal (IF (Intermediate Frequency) signal) obtained by down-converting from a radio frequency to a digital signal, which is handed over to the processor 201. The storage apparatus 202 may store a program that implement functions of the wireless apparatus (access point 3) described in each example embodiment above, and functions of the wireless apparatus (access point 3) described in each example embodiment above may be realized by the processor 201 which reads and executes the program. Similarly as for the terminal 4, the storage apparatus 202 may store a program that implements functions of the terminal 4 described in each example embodiment above, and the functions of the terminal 4 described in each example embodiment above may be realized by the processor 201 which reads and executes the program. In the terminals 4, 4a, 4b, ... in Figs. 1 and 14, the processor 201 may display information on a screen of a display apparatus (not illustrated in the drawing) or receive data input therefrom via the interface 204.

Functions of the management apparatus 1, illustrated in Figs. 1 and 14, according to each example embodiment described above, may also be realized by reading the program from the storage apparatus and executing it (The management apparatus 1 does not need to include the wireless transmission/reception unit 203 and the antenna 205 in Fig. 16. Instead, for example, a display device is connected to the processor 201).

Further, each disclosure of Patent Literature 1 cited above is incorporated herein in its entirety by reference thereto. It is to be noted that it is possible to modify or adjust the example embodiments or examples within the whole disclosure of the present invention (including the Claims) and based on the basic technical concept thereof. Further, it is possible to variously combine or select a wide variety of the disclosed elements (including the individual elements of the individual claims, the individual elements of the individual examples and the individual elements of the individual figures) within the scope of the Claims of the present invention. That is, it is self-explanatory that the present invention includes any types of variations and modifications to be done by a skilled person according to the whole disclosure including the Claims, and the technical concept of the present invention.

The example embodiments above can be described as the following supplementary notes (but not limited thereto).

(Supplementary Note 1)

In a communication network system in which there coexist a plurality of wireless systems in a predetermined space, the communication network system includes a management apparatus that includes a network connection information collection means that collects communication function information and channel information of each wireless system, a network connection management means that generates a connection policy for each of the wireless systems, and a data attribute information collection means that collects attribute information of data communicated by each of the wireless systems, a part or all of the wireless systems includes a connection rule setting means that generates a connection rule information table from the connection policy and the attribute information of the data and a connection execution means that makes a wireless connection using a frequency channel selected based on the connection rule information table, and a plurality of wireless apparatuses constituting each of the wireless systems share the connection rule information table.

(Supplementary Note 2)

The communication network system according to Supplementary Note 1, wherein, in a part or all of the wireless systems, when communication cannot be performed due to rapid change in the wireless environment (change in the wireless environment in a period of time shorter than the data transmission interval or shorter than the time it takes to decide to perform frequency channel switching) or communication cannot be continued with a required quality, the wireless apparatuses constituting each of the wireless systems autonomously change a frequency channel based on the connection rule information table.

(Supplementary Note 3)

The communication network system according to Supplementary Note 2, wherein the connection rule information table includes a priority based on the attribute information of the data, wherein a frequency channel is changed in order in accordance with the priority.

(Supplementary Note 4)

The communication network system according to Supplementary Note 2 or 3, wherein the connection rule information table includes a priority based on the attribute information, wherein the waiting time before a frequency channel is changed is determined in accordance with the priority.

(Supplementary Note 5)

The communication network system according to Supplementary Note 4, wherein the waiting time before a frequency channel is changed is used for measuring at least the frequency utilization of the switching destination frequency channel.

(Supplementary Note 6)

The communication network system according to Supplementary Notes 1 to 5, wherein the attribute information of the data includes delay budget in communication.

(Supplementary Note 7)

The communication network system according to Supplementary Notes 1 to 6, wherein a part or all of the connection policy, the attribute information of the data, and the connection rule information table are appropriately updated.

(Supplementary Note 8)

A wireless apparatus of at least one of one or more wireless apparatuses constituting a wireless system comprising
a connection rule setting means that receives a connection policy and attribute information of communicated data from the outside and generates a connection rule information table from the connection policy and the attribute information of the data, and
a connection execution means that makes a wireless connection using a frequency channel selected based on the connection rule information table, wherein the connection rule information table is shared with another wireless apparatus that is a communication partner.

(Supplementary Note 9)

The wireless apparatus according to Supplementary Note 8, wherein the connection rule information table includes a priority based on the attribute information of the data, wherein a frequency channel is changed in order in accordance with the priority.

(Supplementary Note 10)

The wireless apparatus according to Supplementary Note 8 or 9, wherein the connection rule information table includes a priority based on the attribute information of the data, wherein a waiting time before a frequency channel is changed is determined in accordance with the priority.

(Supplementary Note 11)

The wireless apparatus according to Supplementary Note 10, wherein the waiting time before a frequency channel is changed is utilized for measuring at least the frequency utilization of the switching destination frequency channel.

(Supplementary Note 12)

In a communication network system in which there coexist a plurality of wireless systems in a predetermined space, a communication method for a communication network including:

a network connection information collection step of collecting communication function information and/or communication channel information on each wireless system;
a network connection management step of generating a connection policy for each of the wireless systems;
a data attribute information collection step of collecting attribute information of data communicated by each of the wireless communication systems;
a connection rule setting step of having a part or all of the wireless systems generate a connection rule information table from the connection policy and the attribute information of the data;
a connection execution step of making a wireless connection using a frequency channel selected based on the connection rule information table; and
a connection rule information sharing step of having a plurality of wireless apparatuses constituting each of the wireless systems share the connection rule information table.

(Supplementary Note 13)

The communication method for a communication network according to Supplementary Note 12, including a frequency channel changing step of having the wireless apparatus constituting each of the wireless systems autonomously change a frequency channel based on the connection rule information table when communication cannot be performed due to rapid change in the wireless environment or when communication cannot be continued with the required quality in a part or all of the wireless systems.

(Supplementary Note 14)

The communication method for a communication network according to Supplementary Note 13, including a waiting time determination step of determining a waiting time before a frequency channel is changed in accordance with the priority, based on the attribute information of the data, included in the connection rule information table.

(Supplementary Note 15)

The communication method for a communication network according to Supplementary Note 14, including a frequency channel measuring step of utilizing the waiting time before a frequency channel is changed to measure at least the frequency utilization of the switching destination frequency channel.

(Supplementary Note 16)

A communication terminal comprising:

a connection rule information table that includes at least a waiting time for channel switching and information prescribing a channel switching order;
a length of the waiting time set in accordance with priority level of the wireless system; and
a connection execution means that selects a channel in accordance with the order set in the connection rule information table and controls wireless connection using the selected channel after waiting for a duration of the waiting time set in the connection rule information table when performing channel switching.

(Supplementary Note 17)

The communication terminal according to Supplementary Note 16, comprising a means that monitors communication with another wireless apparatus that is a communication partner over a predetermined period of time to decide channel switching on detection of a disconnection of the communication.

(Supplementary Note 18)

The communication terminal according to Supplementary Note 16 or 17, comprising a means that acquiring at least the usage state of a switching destination frequency channel during the waiting time.

(Supplementary Note 19)

An access point (base station) comprising:

a connection rule information table that includes at least a waiting time for channel switching and information prescribing a channel switching order;
a length of the waiting time set in accordance with priority level of the wireless system; and
a connection execution means that selects a channel in accordance with the order set in the connection rule information table and controls wireless connection using the selected channel after waiting for a duration of the waiting time set in the connection rule information table when performing channel switching.

(Supplementary Note 20)

The access point (base station) according to Supplementary Note 19, including a means that monitors communication with another wireless apparatus that is a communication partner over a predetermined period of time to decide channel switching on detection of a disconnection of the communication.

(Supplementary Note 21)

The access point (base station) according to Supplementary Note 19 or 20, including a means that acquires at least the usage state of a switching destination frequency channel during the waiting time.

REFERENCE SIGNS LIST

| | |
|---|---|
| 1: | management apparatus |
| 2, 2a, 2b: | wireless system |
| 3, 3a, 3b: | wireless apparatus (access point) |
| 4, 4a, 4b: | wireless apparatus (terminal) |
| 11: | network connection information collection means |
| 12: | network connection management means |
| 13: | data attribute information collection means |
| 14: | AP communication function information table |
| 15: | terminal communication function information table |
| 16: | channel information table |
| 17: | storage apparatus |
| 31: | connection rule setting means |
| 32: | connection execution means |
| 33: | connection policy table |
| 34: | data attribute table |
| 35: | connection rule information table |
| 36: | storage apparatus |
| 37: | communication monitoring control means |
| 41: | connection execution means |
| 42: | connection rule information table |
| 43: | communication monitoring control means |
| 100: | communication network system |
| 111: | communication function information acquisition part |
| 112: | channel information acquisition part |
| 121: | connection policy generation part |
| 131: | data attribute acquisition part |
| 141: | network management apparatus |
| 142: | network adapter |
| 143: | CPU (Central Processing Unit) |
| 144: | keyboard |
| 145: | hard disk |
| 146: | connection policy information table |
| 147: | requirement information |
| 148: | communication network reconfiguration management means |
| 148a: | network controller |
| 148b: | connection policy information generation part |
| 149: | communication network reconfiguration execution means |
| 149a: | network reconfiguration execution processing part |
| 200: | computer apparatus |
| 201: | processor |
| 202: | storage apparatus |
| 203: | wireless transmission/reception part |
| 204: | interface |
| 205: | antenna |
| 311: | connection rule generation part |
| 321: | connection execution processing part |
| 411: | connection execution processing part |

**Claims**

1. A wireless apparatus included in a wireless system, the wireless apparatus comprising:

    a connection rule information table that includes at least

a waiting time for channel switching; and
information prescribing a channel switching order, a length of the waiting time set in accordance with priority level of the wireless system; and
a connection execution means that, when performing channel switching, selects a channel in accordance with the order set in the connection rule information table and controls wireless connection using the selected channel after waiting for a duration of the waiting time set in the connection rule information table.

2. The wireless apparatus according to claim 1, comprising
a means that monitors communication with another wireless apparatus that is a communication partner over a predetermined period of time and decides to perform channel switching, upon detection of a disconnection of the communication.

3. The wireless apparatus according to claim 1 or 2, wherein the connection execution means includes
a means that acquires at least usage state of a switching destination frequency channel during the waiting time and determines whether or not communication using the switching destination frequency channel is possible based on the usage state.

4. A wireless system comprising:

an access point; and
a terminal that wirelessly communicates with the access point,
wherein the access point includes:

a connection rule information table that includes at least
a waiting time for channel switching; and
information prescribing a channel switching order, a length of the waiting time set in accordance with priority level of the wireless system; and
a connection execution means that selects a channel in accordance with the order set in the connection rule information table and controls wireless connection using the selected channel after waiting for a duration of the waiting time set in the connection rule information table when performing channel switching, and wherein the terminal includes
a connection rule information table that shares information with the connection rule information table of the access point,
wherein, when switching the channel, the terminal selects a channel in accordance with the order set in the connection rule information table.

5. A management apparatus connected to one or more wireless systems, the management apparatus comprising:

a network connection information collection means that collects at least one of communication function information and channel information of the wireless system;
a network connection management means that generates a connection policy for the wireless system; and
a data attribute information collection means that collects attribute information of data communicated by the wireless system, wherein
the management apparatus provides the attribute information of the data and the connection policy to at least one wireless apparatus in the wireless system.

6. A communication network system comprising a plurality of wireless systems, the communication network system comprising:
a management apparatus that includes:

a network connection information collection means that collects at least one of communication function information and channel information of at least one of the plurality of wireless systems;
a network connection management means that generates a connection policy for at least one of the plurality of wireless systems; and
a data attribute information collection means that collects attribute information of data communicated by at least one of the plurality of wireless systems, wherein
at least one of the plurality of the wireless systems includes:

a connection rule setting means that generates a connection rule information table that includes at least a waiting time for channel switching and information prescribing a channel switching order, from the connection policy and the attribute information of the data; and

a connection execution means that makes a wireless connection using a channel which is selected based on the connection rule information table,

wherein a plurality of wireless apparatuses that are included in at least one of the plurality of the wireless systems and wirelessly communicate, share the connection rule information table, and

wherein at least one of the plurality of the wireless apparatuses includes

the connection execution means, wherein the at least one of the plurality of the wireless apparatuses selects a channel in accordance with the order in the connection rule information table when performing channel switching, and controls a wireless connection using the selected channel after waiting for a duration of the waiting time set in the connection rule information table.

7. The communication network system according to claim 6, wherein the connection execution means includes a means that measures at least a usage state of a switching destination frequency channel during the waiting time and determines whether or not communication using the switching destination frequency channel is possible, based on a measurement result of the usage state.

8. A communication control method for a wireless apparatus included in a wireless system, the method comprising:

having a connection rule information table that includes at least a waiting time for channel switching and information prescribing a channel switching order;

setting a length of the waiting time in accordance with priority level of the wireless system; and

when performing channel switching, selecting a channel in accordance with the order set in the connection rule information table and controlling a wireless connection using the selected channel after waiting for a duration of the waiting time set in the connection rule information table.

9. A communication control method for a communication network system including a plurality of wireless systems, the method comprising:

collecting, by a management apparatus, at least one of communication function information and channel information of at least one of the plurality of wireless systems;

generating, by the management apparatus, a connection policy for the at least one of the plurality of the wireless systems; and

collecting, by the management apparatus, attribute information of data communicated by the at least one of the plurality of wireless systems, wherein the communication control method comprises

generating, by the at least one of the plurality of the wireless systems, a connection rule information table that includes at least a waiting time for channel switching and information prescribing a channel switching order from the connection policy and the attribute information of the data; and

making, by the at least one of the plurality of the wireless systems, a wireless connection using a channel selected, based on the connection rule information table, and

sharing, by a plurality of wireless apparatuses that are included in the at least one wireless system and that wirelessly communicate, the connection rule information table.

10. A program causing a computer to execute:

a process that stores in a storage apparatus a connection rule information table that includes at least a waiting time for channel switching and information prescribing a channel switching order and that sets a length of the waiting time in accordance with priority level of a wireless system; and

a connection execution process that when performing channel switching, selects a channel in accordance with the order set in the connection rule information table and controls a wireless connection, using the selected channel after waiting for a duration of the waiting time set in the connection rule information table.

# FIG. 1

## 100

### MANAGEMENT APPARATUS — 1

- 11 NETWORK CONNECTION INFORMATION COLLECTION MEANS
  - 111 COMMUNICATION FUNCTION INFORMATION ACQUISITION PART
  - 112 CHANNEL INFORMATION ACQUISITION PART
- NETWORK CONNECTION MANAGEMENT MEANS — 12
  - CONNECTION POLICY GENERATION PART — 121
- 14 AP COMMUNICATION FUNCTION INFORMATION TABLE
- 15 TERMINAL COMMUNICATION FUNCTION INFORMATION TABLE
- 16 CHANNEL INFORMATION TABLE
- 17
- 13 DATA ATTRIBUTE INFORMATION COLLECTION MEANS
  - 131 DATA ATTRIBUTE ACQUISITION PART

WIRELESS SYSTEM — 2a

WIRELESS SYSTEM — 2b

### WIRELESS SYSTEM — 2

- 3
- 31 CONNECTION RULE SETTING MEANS
  - 311 CONNECTION RULE GENERATION PART
- CONNECTION EXECUTION MEANS — 32
  - CONNECTION EXECUTION PROCESSING PART — 321
- 35 CONNECTION RULE INFORMATION TABLE
- 36 CONNECTION POLICY TABLE — 33
- 34 DATA ATTRIBUTE TABLE

WIRELESS APPARATUS : ACCESS POINT (AP)

- 4 CONNECTION EXECUTION MEANS
  - 41 CONNECTION EXECUTION PROCESSING PART — 411
  - 42 CONNECTION RULE INFORMATION TABLE

WIRELESS APPARATUS : TERMINAL

TERMINAL — 4a

TERMINAL — 4b

EP 3 582 548 A1

# FIG. 2

```
          START

ACQUIRE COMMUNICATION
FUNCTION INFORMATION        S21

ACQUIRE CHANNEL INFORMATION  S22

CREATE CONNECTION POLICY     S23

ACQUIRE DATA ATTRIBUTES      S24

CREATE CONNECTION RULE       S25

SHARE CONNECTION RULE        S26

EXECUTE CONNECTION           S27

           END
```

# FIG. 3

14: AP COMMUNICATION FUNCTION INFORMATION TABLE
15: TERMINAL COMMUNICATION FUNCTION INFORMATION TABLE

| CHANNEL | MCS |
|---------|-----|
| 1 ch | 1, 2, 3 |
| 2 ch | 1, 2, 3 |
| 3 ch | 1, 2, 3, 4, 5 |
| 4 ch | 1, 2, 3, 4, 5 |
| 5 ch | 1, 2, 3, 4, 5 |
| 6 ch | 1, 2, 3 |
| 7 ch | 4, 5 |
| 8 ch | 4, 5 |

# FIG. 4

16: CHANNEL INFORMATION TABLE

| CHANNEL | CHANNEL OCCUPANCY RATE |
|---------|------------------------|
| 1ch | 80% |
| 2ch | 60% |
| 3ch | 0% |
| 4ch | 30% |
| 5ch | 35% |
| 6ch | 50% |
| 7ch | 75% |
| 8ch | 15% |

# FIG. 5

33: | CONNECTION POLICY TABLE

| CHANNEL | CHANNEL OCCUPANCY RATE | ALLOCATION ORDER |
|---------|------------------------|------------------|
| 1ch | 80% | 2 |
| 2ch | 60% | 1 |
| 3ch | 0% | 3 |
| 4ch | 30% | 7 |
| 5ch | 35% | 8 |
| 6ch | 50% | 5 |
| 7ch | 75% | 6 |
| 8ch | 15% | 4 |

# FIG. 6

34: DATA ATTRIBUTE TABLE

| WIRELESS SYSTEM | DATA TYPE | DATA TRANSMISSION INTERVAL | DATA AMOUNT | DELAY BUDGET |
|---|---|---|---|---|
| A | 3 | 10msec | 1kbps | 100mec |
| B | 2 | 100msec | 700kbps | 5sec |
| C | 2 | 500msec | 2kbps | 5sec |
| C | 3 | 30msec | 20kbps | 200msec |
| D | 1 | 50msec | 500bps | 500mec |
| E | 1 | 50msec | 2kbps | 1sec |
| F | 3 | 20msec | 10kbps | 100msec |
| G | 4 | IRREGULAR | UNDEFINED | 50sec |

# FIG. 7

35 (42): CONNECTION RULE INFORMATION TABLE

| WAITING TIME | 30msec |
|---|---|
| CONNECTION ORDER | CONNECTION ORDER |
| 1 | 2ch |
| 2 | 3ch |
| 3 | 1ch |
| 4 | 8ch |
| 5 | 6ch |
| 6 | 7ch |
| 7 | 4ch |
| 8 | 5ch |

EP 3 582 548 A1

# FIG. 8

# FIG. 9

# FIG. 10

# FIG. 11

FREQUENCY SWITCHING

```
                    ┌─────────┐
                    │  START  │
                    └─────────┘
                         │
         ┌───────────────────────────────┐
         │   SELECT FREQUENCY CHANNEL     │
         │    FROM CONNECTION RULE        │  S111
         │     INFORMATION TABLE          │
         └───────────────────────────────┘
                         │
         ┌───────────────────────────────┐
         │   SWITCH FREQUENCY CHANNEL     │  S112
         └───────────────────────────────┘
                         │
         ┌───────────────────────────────┐
         │  MEASURE CHANNEL OCCUPANCY     │  S113
         │            RATE                │
         └───────────────────────────────┘
                         │
    No       ◇ END OF WAITING TIME? ◇        S114
                         │ Yes
             ◇ COMMUNICATION POSSIBLE? ◇  No  S115
                         │ Yes
         ┌───────────────────────────────┐
         │     START COMMUNICATION        │  S116
         └───────────────────────────────┘
                         │
                    ┌─────────┐
                    │   END   │
                    └─────────┘
```

# FIG. 12

# FIG. 13

# FIG. 14

100

| MANAGEMENT APPARATUS | 1 | WIRELESS SYSTEM | 2 |

**NETWORK CONNECTION INFORMATION COLLECTION MEANS** — 11
- COMMUNICATION FUNCTION INFORMATION ACQUISITION PART — 111
- CHANNEL INFORMATION ACQUISITION PART — 112

**NETWORK CONNECTION MANAGEMENT MEANS** — 12
- CONNECTION POLICY GENERATION PART — 121

- AP COMMUNICATION FUNCTION INFORMATION TABLE — 14
- TERMINAL COMMUNICATION FUNCTION INFORMATION TABLE — 15
- CHANNEL INFORMATION TABLE — 16
- 17

**DATA ATTRIBUTE INFORMATION COLLECTION MEANS** — 13
- DATA ATTRIBUTE ACQUISITION PART — 131

WIRELESS SYSTEM — 2a
WIRELESS SYSTEM — 2b

**CONNECTION RULE SETTING MEANS** — 31
- CONNECTION RULE GENERATION PART — 311

**CONNECTION EXECUTION MEANS** — 32
- CONNECTION EXECUTION PROCESSING PART — 321

- CONNECTION RULE INFORMATION TABLE — 35
- CONNECTION POLICY TABLE — 36
- DATA ATTRIBUTE TABLE — 34
- 33

COMMUNICATION MONITORING CONTROL MEANS — 37

3

**CONNECTION EXECUTION MEANS** — 4
- CONNECTION EXECUTION PROCESSING PART — 41 / 411
- CONNECTION RULE INFORMATION TABLE — 42
- COMMUNICATION MONITORING CONTROL MEANS — 43

TERMINAL — 4a
TERMINAL — 4b

EP 3 582 548 A1

# FIG. 15

35 (42): CONNECTION RULE INFORMATION TABLE

| DETERMINATION TIME | 10msec |
|---|---|
| WAITING TIME | 30msec |

| CONNECTION ORDER | CONNECTION ORDER |
|---|---|
| 1 | 2ch |
| 2 | 3ch |
| 3 | 1ch |
| 4 | 8ch |
| 5 | 6ch |
| 6 | 7ch |
| 7 | 4ch |
| 8 | 5ch |

FIG. 16

# FIG. 17

**141**

**142** NETWORK ADAPTER

**148** COMMUNICATION NETWORK RECONFIGURATION MANAGEMENT MEANS

**148a** NETWORK CONTROLLER

**148b** CONNECTION POLICY INFORMATION GENERATION PART

**149** COMMUNICATION NETWORK RECONFIGURATION EXECUTION MEANS

**149a** NETWORK RECONFIGURATION EXECUTION PROCESSING PART

**143** CPU

KEYBOARD

**144**  **145**  CONNECTION POLICY INFORMATION TABLE   REQUIREMENT INFORMATION

**146**   **147**

## INTERNATIONAL SEARCH REPORT

| International application No. |
| --- |
| PCT/JP2018/004022 |

A. CLASSIFICATION OF SUBJECT MATTER
Int.Cl. H04W36/06(2009.01)i, H04W16/14(2009.01)i, H04W84/12(2009.01)i

According to International Patent Classification (IPC) or to both national classification and IPC

B. FIELDS SEARCHED

Minimum documentation searched (classification system followed by classification symbols)
Intel. H04B7/24-7/26, H04W4/00-99/00

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2008-078807 A (TOSHIBA CORP.) 03 April 2008, paragraphs [0008]-[0009], [0032]-[0065] & US 2008/0069041 A1, paragraphs [0044]-[0045], [0072]-[0114] | 1, 4, 8, 10<br>2, 3 |
| Y | JP 2010-136291 A (TOYOTA INFOTECHNOLOGY CENTER CO., LTD.) 17 June 2010, paragraphs [0042]-[0045], [0073]-[0075] & US 2011/0176508 A1, paragraphs [0062]-[0065], [0095]-[0097] & WO 2010/067773 A1 & EP 2317812 A1 | 2, 3 |
| A | JP 2015-122660 A (OKI ELECTRIC INDUSTRY CO., LTD.) 02 July 2015, entire text & US 2015/0181619 A1 | 1-4, 8, 10 |

☐ Further documents are listed in the continuation of Box C.　　☐ See patent family annex.

| | |
| --- | --- |
| *　　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>　　23 April 2018 (23.04.2018) | Date of mailing of the international search report<br>　　01 May 2018 (01.05.2018) |
| --- | --- |
| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |

Form PCT/ISA/210 (second sheet) (January 2015)

## INTERNATIONAL SEARCH REPORT

| International application No. |
|---|
| PCT/JP2018/004022 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
See extra sheet

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

| International application No. |
| --- |
| PCT/JP2018/004022 |

Document 1: JP 2008-078807 A (TOSHIBA CORP.) 03 April 2008, paragraphs [0008]-[0009], [0032]-[0065] & US 2008/0069041 A1, paragraphs [0044]-[0045], [0072]-[0114]

(Invention 1) Claims 1-4, 8, and 10
    Claims 1-4, 8, and 10 have a special technical feature in which a "wireless device included in a wireless system is provided with a connection rule information table including at least information stipulating channel switching priorities and a wait time until a channel is switched, the length of the wait time being set according to the priority order of the wireless system, and, when switching a channel, the wireless device selects a channel according to the priorities stipulated in the connection rule information table, and controls wireless connection in the selected channel after waiting for the wait time set in the connection rule information table", and are thus classified as invention 1.

(Invention 2) Claim 5
    Claim 5 shares a common technical feature of a device related to a wireless system, with claim 1 classified as invention 1. However, this technical feature does not make a contribution over the prior art in light of the disclosure of document 1 (particularly see paragraphs [0008]-[0009], [0032]-[0065]), and is thus not considered to be a special technical feature. Furthermore, claim 5 and claim 1 share no identical or corresponding special technical features.
    Furthermore, claim 5 is not dependent on claim 1. In addition, claim 5 is not substantially identical or equivalent to any of the claims classified as invention 1.
    Therefore, claim 5 cannot be classified as invention 1.
    Claim 5 has a special technical feature in which a "management device connected to one or more wireless systems collects at least one among communication path information and communication function information about the wireless systems, generates a connection policy of the wireless systems, collects attribute information of data communicated by the wireless systems, and provides the attribute information of the data and the connection policy to one or more wireless devices of the wireless systems", and is thus classified as invention 2.

(Invention 3) Claims 6-7 and 9
    Claims 6-7 and 9 share a common technical feature of including a device related to a wireless system, with claim 1 classified as invention 1 and claim 5 classified as invention 2. However, this technical feature does not make a contribution over the prior art in light of the disclosure of document 1 (particularly see paragraphs [0008]-[0009], [0032]-[0065]), and is thus not considered to be a special technical feature. Furthermore, claims 6-7 and 9 and claim 1 or 5 share no identical or corresponding special technical features.
    Furthermore, claims 6-7 and 9 are not dependent on claim 1 or 5. Furthermore, claims 6-7 and 9 are not substantially identical or equivalent to any of the claims classified as invention 1 or 2.
    Therefore, claims 6-7 and 9 cannot be classified as invention 1 or 2.
    Claims 6-7 and 9 have a special technical feature in which "at least one of a plurality of wireless systems generates a connection rule information table, including at least information stipulating channel switching priorities and a wait time until a channel is switched, from a connection policy of at least one wireless system among the plurality of wireless systems and attribute information of data communicated by at least one wireless system among the plurality of wireless systems, the connection policy being generated by a management device and the attribute information being collected by the management device; and a plurality of wireless devices, which are included in at least one wireless system among the plurality of wireless systems and communicate wirelessly, wirelessly connect using a channel selected on the basis of the connection rule information table", and are thus classified as invention 3.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017020720 A

- JP 2009246874 A